# EUROPEAN PATENT APPLICATION

(11) **EP 4 144 693 A1**
(43) Date of publication of application: **08.03.2023**
(21) Application number: 21795357.9
(22) Date of filing: 27.04.2021
(51) Int. Cl.: C01B 39/48, B01J 29/04, B01J 29/70

(54) **ENANTIOENRICHED CHIRAL MICROPOROUS MATERIAL, PREPARATION METHOD AND USES**

(30) Priority: 28.04.2020 ES 202030360
(71) Applicant: Consejo Superior de Investigaciones Científicas (CSIC), 28006 Madrid (ES)
(72) Inventor: GÓMEZ-HORTIGÜELA SAINZ, Luis, 28049 Madrid (ES); PÉREZ PARIENTE, Joaquín, 28049 Madrid (ES); NIETO HERNÁNDEZ, David, 28049 Madrid (ES); BERNARDO MAESTRO, Mª Beatriz, 28049 Madrid (ES); DE LA SERNA VALDÉS, Ramón, 28049 Madrid (ES); SAINZ VAQUE, Raquel, 28049 Madrid (ES)
(74) Representative: Pons
(86) International application number: PCT/ES2021/070285
(87) International publication number: WO 2021/219914

(57) **Abstract**

The present invention relates to a new chiral zeolite material of composition a SiO₂ : *b* GeO₂ : *c* X₂O₃ : *d* YO₂, with an ITV structure, prepared with a specific chiral organic structure-directing agent, (1S,2S)-N-ethyl-N-methyl-pseudoephedrine or its enantiomer, (1 R,2R)-N-ethyl-N-methyl-pseudoephedrine, which means that the material is rich in one of the crystalline forms; a method whereby said material is obtained, and the use thereof in adsorption and catalysis processes.

## Description

The present invention relates to a new chiral zeolite material with a composition *a* SiO₂ : *b* GeO₂ : *c* X₂O₃ : *d* YO₂, with an ITV structure, prepared with a specific chiral organic structure-directing agent, (1S,2S)-N-ethyl-N-methyl-pseudoephedrinium or its enantiomer, (1R,2R)-N-ethyl-N-methyl-pseudoephedrinium, which means that the material is enriched in one of the crystalline enantiomorphic forms, to the method whereby said material is obtained, as well as the application thereof in adsorption and catalysis processes. The present invention is comprised in the field of zeolite materials with catalytic and adsorbent properties, and in the field of chemical and pharmaceutical industry.

### BACKGROUND OF THE INVENTION

Zeolites are crystalline microporous aluminosilicates with a defined three-dimensional structure formed by SiO₄ and AlO₄ tetrahedra. The three-dimensional structuring of these tetrahedral units in different geometric arrangements gives rise to the formation of very diverse microporous structures (more than 240), generating systems of pores and cavities of molecular dimensions. This structured porosity gives them the property of acting as molecular sieves, allowing the differentiation of chemical species based on their geometric properties, that is, based on their shape and size. The incorporation of Al⁺³ or other trivalent elements in the inorganic zeolite network generates a negative charge in the network which is compensated for by the presence of cations in the pores and/or cavities. Said cations can be replaced by protons, thereby generating Bronsted acid centers. Not only Al but many other elements can be incorporated into the zeolite network as a replacement for Si (any element incorporated into the tetrahedral network of a zeolite is commonly called T), generating materials with different catalytic properties which can be used in acid catalysis reactions, base catalysis reactions, redox reactions, or even bifunctional materials if other functionalities are added.

The chirality of an object is the property of not being superimposable on its mirror image. The biopolymers making up living beings are chiral, with only one of the mirror forms (called enantiomers) forming part of said biopolymers. In that sense, due to said asymmetric functioning of life, the metabolism of living beings distinguishes between the enantiomers of a chiral compound: in many cases, the biochemical properties of both enantiomers are different, and even in some cases, one of the enantiomers has beneficial properties in the organism, while the other can be harmful, such as the case of the medicinal product, thalidomide, in the last century.

The enantiomers of a chiral compound have exactly the same physicochemical properties, and this greatly hinders their separation. In that sense, the main challenge today in the synthesis of chiral compounds consists of the enantioselective preparation of said compounds. In this sense, the chirality of an organic compound is only demonstrated in the presence of a chiral environment, that is, upon interacting with another chiral element. Therefore, one of the greatest challenges today in the chemical and pharmaceutical industry consists of the development of solid materials which are capable of distinguishing the enantiomers of chiral compounds through adsorption or asymmetric catalysis processes. Obtaining said enantioselective solids would have a significant impact on the fine chemical industries (pharmaceutical, cosmetics, etc.) since it would allow obtaining chiral compounds enriched in the enantiomer of interest. In fact, there is a current trend in the pharmaceutical industry towards the so-called chiral switch, consisting of a transition from marketing chiral drugs in racemic form, as was done traditionally, to marketing the same in an enantiomerically pure form, with subsequent improvement in sustainability and reduction of adverse effects on the body.

In this context, a particularly interesting type of zeolite materials are those having a chiral structure, in which the structure crystallizes into a chiral space group, generating a long-range helical ordering of TO₄ units. Particularly, there are a number of zeolite structures with inherently chiral topologies, including polymorph A of beta zeolite (BEA) (zeolite structural types are referred to using a three-letter code), chiral zincophosphate (CZP), beryllosilicate OSB-1 (OSO), the mineral goosecreekite (GOO), cobalt-containing aluminophosphate CoAPO-CJ40 (JRY), aluminosilicate Linde Type J (LTJ), and ITQ-37 (ITV) or SU-32 (STW) germanosilicates, with the latter also being prepared in the form of pure silica (HPM-1). The existence of these materials demonstrates the viability of chiral zeolite structures of this type. However, except in a particular case that will be mentioned below, all these materials obtained by direct synthesis are formed by a 50% mixture of enantiomorphic crystals of both handedness (such as in the case of the STW or ITV structure), or by intergrowths of polymorphs which are in turn 50% mixtures of enantiomorphic domains (such as in the case of polymorph A of beta zeolite). This clearly demonstrates the enormous difficulty of obtaining these chiral zeolites in an enantio-enriched form, despite the great effort invested by various research groups over the years. Naturally, the existence of crystals made up of 50% of each enantiomorphic form makes it impossible to use these materials in enantioselective discrimination processes. In a particular case, a material with a CZP structure was successfully enriched by means of using chiral nucleotides in a post-synthesis secondary crystallization process [Zhang et al., Angew Chem Int Ed 48 (2009) 6049-6051]; however, this material is not stable to the generation of porosity, and therefore cannot be applied in asymmetric processes.

The synthesis of zeolite materials generally requires adding to the synthesis gels organic compounds which direct the crystallization process towards a certain structure, wherein the shape and size of the organic agent determines the porosity of the resulting material, thereby transferring its geometric properties to the zeolite through a template effect. These organic compounds are commonly referred to as structure-directing agents (SDAs). In this context, a chiral zeolite material with an STW structure enriched in one of the enantiomorphic crystals has been successfully prepared very recently by means of using a specific chiral organic agent in the synthesis [Brand et al., PNAS 114 (2017) 5101-5106]. By means of suitably selecting the molecular structure of the imidazolium ring-based organic agent, the preparation of which was tremendously complicated, it was possible to transfer its asymmetric geometric properties to the STW chiral zeolite material that crystallized around it. In fact, it was demonstrated that this enantio-enriched chiral material is capable of carrying out adsorption and catalysis processes in an enantioselective manner, which demonstrates the applicability of materials of this type in asymmetric processes. However, said applicability is limited in this case to small sized molecules given the pore size of this zeolite having 10T channels.

One of the most interesting zeolites discovered in recent years is zeolite ITQ-37 (WO 2007/099190 A1), with the structural code ITV, which crystallizes into a chiral space group [Sun et al., Nature 458 (2009) 1154-1157]. The great interest for this structure lies in the combination of its pore size delimited by 30T rings, with large openings of 4.3 x 19.3 Å, along with the chiral nature of its structure, forming a gyroidal channel system with asymmetric openings. In that sense, depending on the handedness of the zeolite structure, the material can potentially crystallize into the cubic space groups P4,32 or P4₃32, giving rise to the two enantiomorphic crystals. This structure was obtained in the form of germanosilicate, in the presence of high Ge contents, and using a very complex achiral organic agent (C₂₂N₂H₄₀). Nevertheless, the fact of using an achiral organic agent (since it is a *meso* form despite having four stereogenic centers) necessarily means that the ITQ-37 polycrystalline material consists of 50% mixture of enantiomorphic crystals of both handedness (racemic conglomerate). Accordingly, the ITQ-37 zeolite will not be able to carry out enantioselective discrimination processes.

Subsequent studies have demonstrated that the same structure (ITV) can be obtained in the presence of other organic agents [Qian et al., Microporous Mesoporous Mater. 164 (2012) 88-92; Chen et al., CrystEngComm. 18 (2016) 2735-2741; Zhang et al., Chem. Commun. 55 (2019) 2753-2756], although all of them are polycyclic compounds of great size and complexity, which demonstrates the great difficulty in obtaining organic agents which direct the formation of a structure with such a complex porous system. In any case, the structure being enriched in one of the enantiomorphic crystals has not been demonstrated in any of the materials with an ITV structure obtained so far. In this context, an essential challenge would be to try to obtain this zeolite structure enriched in one of the enantiomorphic crystals (P4₁32 or P4₃32), which could potentially develop enantioselective discrimination processes.

### DESCRIPTION OF THE INVENTION

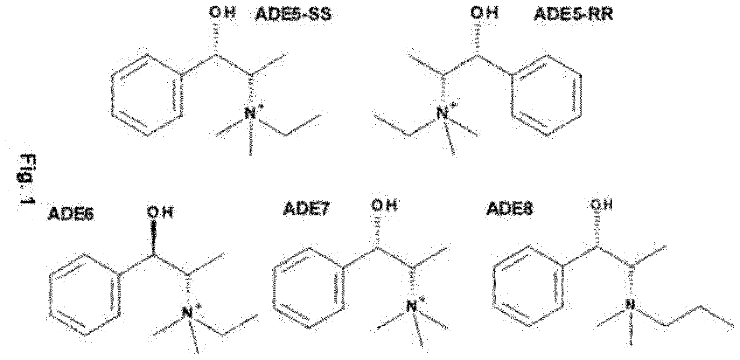

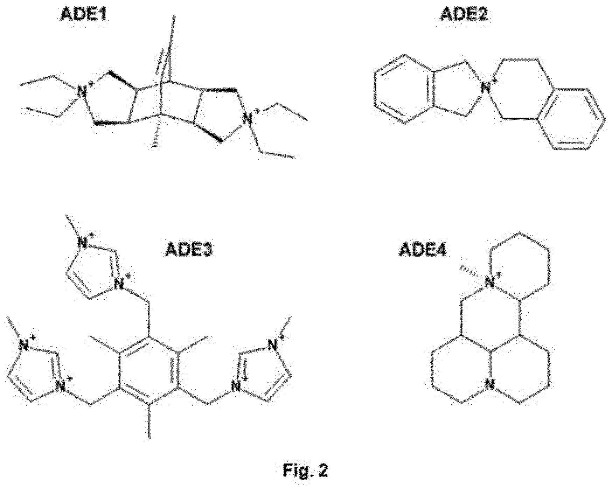

The present invention provides a new chiral zeolite material by means of using the organic cation (1S,2S)-N-ethyl-N-methyl-pseudoephedrinium or its enantiomer (1R,2R)-N-ethyl-N-methyl-pseudoephedrinium as a structure-directing agent (Figure 1, ADE5), in the presence of a source of Si and a source of Ge, a source of fluoride anions and water, which leads to the crystallization of this new crystalline microporous material referred to as GTM-3 with an ITV structure, provided that the crystallization process is carried out at moderate temperatures (below 130°C). Said observation is highly unexpected given the great difference between the molecular structure of this small-sized, single-ring organic compound (Figure 1, ADE5) and the molecular structure of the organic agents that have given rise to this zeolite up until now (Figure 2, ADE1-ADE4), all of them being large polycyclic agents.

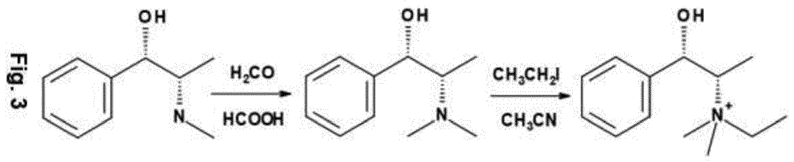

A novelty of the GTM-3 material obtained by means of the method described in the present invention consists of the use of a new organic compound as an ITV structure-directing agent, readily prepared from a readily available natural chiral product, the alkaloid (1S,2S)-pseudoephedrine or its enantiomer (1R,2R)-pseudoephedrine, by means of alkylation reactions (see Example 1 and Figure 3). The particular interest of this organic agent is that it is extremely specific in directing the crystallization of the ITV structure, as demonstrated by the fact that other organic molecules derived from the same alkaloid precursors with very similar structures (Figure 1), such as (1S,2S)-N,N-dimethyl-pseudoephedrinium (in which the ethyl group is replaced by a methyl, ADE7), (1S,2S)-N-methyl-N-propyl-pseudoephedrinium (in which the ethyl group is replaced by a propyl, ADE8), or (1R,2S)-N-methyl-N-ethyl-ephedrinium (in which only the absolute configuration of C1 is reversed, ADE6) do not direct the formation of this structure, giving rise to amorphous materials. The fact that such subtle changes in the molecular structure of the organic agent of the present invention prevent the formation of the ITV structure demonstrates a high specificity of the organic agent towards this structure, a connection that is highly unusual in zeolite materials science. Likewise, the difference in the porosity of the GTM-3 material obtained, with a three-dimensional pore system of up to 19.3 Å (approaching the mesopore range), in comparison with the microporous structures previously obtained with other derivatives of (1R,2S)-ephedrine and (1S,2S)-pseudoephedrine, in which non-chiral structures with pore systems smaller than 7.3 Å were invariably obtained, is also very unexpected, and therefore novel. In turn, it is surprising that despite the large pore size in the GTM-3 material, the aromatic rings in the organic agent used do not develop π-type interactions to form large supramolecular entities, contrary to what would occur in non-chiral materials obtained with other ephedrine derivatives. The main novelty of this invention lies in the fact that the use of (1S,2S)-N-methyl-N-ethyl-pseudoephedrinium or its enantiomer, (1R,2R)-N-methyl-N-ethyl-pseudoephedrinium, allows obtaining this GTM-3 zeolite structure enriched in either one of the enantiomorphic crystals of the ITV structure (P4,32 or P4₃32), which, together with its high porosity, allows large molecules to be processed in an enantioselective manner. Said enantio-enriched material with an ITV structure can be used as an asymmetric catalyst or adsorbent to selectively prepare the enantiomers of interest from chiral organic compounds, with the formidable repercussion that this has in fine chemical industries, particularly in the pharmaceutical industry.

The great effectiveness of this organic compound as a structure-directing agent allows the preparation of the GTM-3 material at unusually low temperatures, even below 100°C (it has even been obtained at 60°C). This observation is also very unexpected since the synthesis of zeolite materials with a high T(IV)/T(III) ratio (T(IV) being a tetravalent element such as silicon or germanium, and T(III) a trivalent element such as aluminum, gallium, or boron), or in the absence of T(III) elements, such as the case of the present invention, generally requires crystallization temperatures above 130°C, usually in the range of 150-175°C. Moreover, the great effectiveness of the organic agent used in the present invention allows obtaining the GTM-3 material in the presence of reduced amounts of Ge in the gel, with Si/Ge ratios from 1 to 8, for example (see Examples 3 to 15), usually with a Si/Ge ratio of between 3 and 5, although these Ge content and temperature values do not limit the scope of the present invention. These Ge content values are significantly lower than those obtained in the ITQ-37 zeolite described above (which was obtained with Si/Ge ratios of about 1), which in turn entails an advantage in the GTM-3 material since the presence of high amounts of Ge entails a low stability against hydrolysis, and therefore a limited applicability of the resulting material.

Therefore, in a first aspect, the present invention relates to a new chiral microporous material referred to as GTM-3, hereinafter material of the invention, characterized by:
- having a chemical composition in its anhydrous calcined form *a SiO₂ : b GeO₂ : c X₂O₃ : d YO₂,* wherein X is one or more trivalent elements, Y is one or more tetravalent elements other than Si or Ge, the *b*/*a* ratio can take any value greater than 0, *cl(a+b)* can take any value between 0 and 0.2, both included, and *dl(a+b)* can take any value between 0 and 0.2, both included;
- having an ITV structure;
- and being enantio-enriched in either one of the enantiomorphic crystalline forms of the ITV structure.

It is enantio-enriched as P4,32 or P4₃32 depending on whether it is prepared using the (1S,2S)-N-ethyl-N-methyl-pseudoephedrinium cation or the (1R,2R)-N-ethyl-N-methyl-pseudoephedrinium cation, respectively, as the organic structure-directing agent.

"Chiral microporous material referred to as GTM-3" of the present invention is understood to mean a material essentially enantio-enriched in either one of the enantiomorphic crystalline forms, P4,32 or P4₃32, described in the present invention. In the present invention, "essentially enantio-enriched" is understood to mean that the material contains a greater proportion of one of the enantiomorphic crystalline forms P4,32 or P4₃32.

Furthermore, in the present invention, "organic structure-directing agent or ADE" is understood to mean a specific organic compound the use of which leads to the crystallization of a specific zeolitic structural topology; specifically the cation (1S,2S)-N-ethyl-N-methyl-pseudoephedrinium or its enantiomer, (1R,2R)-N-ethyl-N-methyl-pseudoephedrinium, leads to the specific crystallization of the ITV structure, enriched in either one of the two enantiomorphic crystalline forms P4,32 or P4₃32, described above. This structure-directing agent can be in the form of hydroxide, halide, preferably iodide, or mixtures thereof.

The technical advantages of the GTM-3 material described in the present invention are:
- having small amounts of Ge, which will significantly improve the hydrothermal stability of the calcined material;
- the presence of elements other than Si or Ge, such as Al, B, Ti, or Sn, conferring catalytic properties to the resulting material;
- the specific use of these chiral organic agents enables preferred enantioselective crystallization of one of the enantiomorphic crystals (P4₁32 or P4₃32), which in turn enables the use of the material as an asymmetric catalyst or adsorbent in enantioselective discrimination processes of transcendental importance in the fine chemical and pharmaceutical industries.

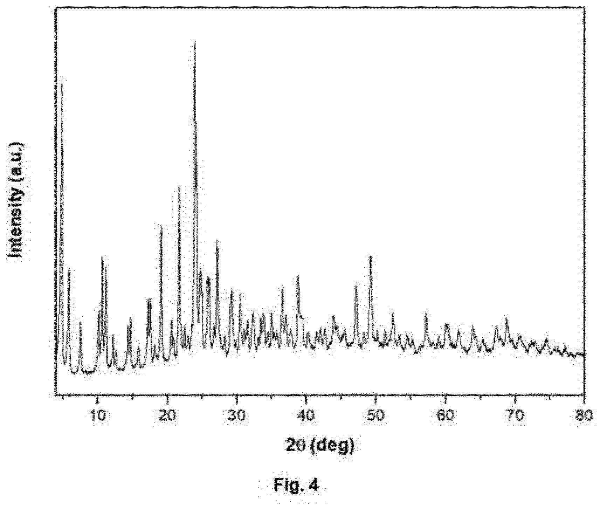

In the present invention, "ITV structure" is understood to mean the corresponding zeolite structure as described in the International Zeolite Association (IZA) database [http://europe.iza-structure.org/IZA-SC/framework.php?STC=ITV; Sun et al., Nature 458 (2009) 1154-1157], with three-dimensional pores delimited by 30T rings, and presenting an X-ray diffraction diagram as shown in Figure 4.

In a preferred embodiment of the material of the present invention, the ITV structure in its non-calcined form is defined by having an X-ray diffraction pattern characteristic thereof, recorded with a Philips X'PERT diffractometer using copper Kα radiation with a Ni filter, and comprising the following values of angles 2θ (°) and distance d (Å):

| Angle 2θ (±0.20) (°) | Distance d (±0.500) (Å) |
|---|---|
| 4.77 | 18.532 |
| 5.83 | 15.150 |
| 7.53 | 11.740 |
| 8.25 | 10.708 |
| 10.11 | 8.753 |
| 10.65 | 8.304 |
| 11.18 | 7.917 |
| 12.15 | 7.284 |
| 12.62 | 7.017 |
| 13.98 | 6.327 |
| 14.31 | 6.190 |
| 14.70 | 6.025 |
| 15.83 | 5.600 |
| 17.22 | 5.151 |
| 17.55 | 5.053 |
| 18.18 | 4.879 |
| 18.57 | 4.775 |
| 19.12 | 4.642 |
| 20.57 | 4.317 |
| 20.85 | 4.260 |
| 21.67 | 4.102 |
| 22.46 | 3.959 |
| 22.97 | 3.873 |
| 23.02 | 3.861 |
| 23.95 | 3.715 |
| 24.21 | 3.676 |
| 24.67 | 3.608 |
| 24.93 | 3.572 |
| 25.83 | 3.450 |
| 26.07 | 3.418 |
| 26.73 | 3.336 |
| 27.16 | 3.284 |
| 28.23 | 3.162 |
| 29.05 | 3.074 |
| 29.26 | 3.052 |
| 29.84 | 2.994 |
| 30.44 | 2.936 |
| 31.02 | 2.883 |
| 31.58 | 2.833 |
| 32.34 | 2.768 |
| 33.06 | 2.710 |
| 33.42 | 2.682 |
| 33.78 | 2.653 |
| 34.45 | 2.603 |
| 34.99 | 2.565 |
| 35.44 | 2.531 |
| 35.68 | 2.517 |
| 36.54 | 2.459 |
| 37.02 | 2.428 |
| 37.73 | 2.385 |
| 37.86 | 2.375 |
| 38.78 | 2.322 |
| 39.45 | 2.284 |

In the present invention, "distance d" is understood to mean the reticular or interplanar spacing or distance that complies with the Bragg's law and is measured in Angstroms (Å). In zeolite materials such as those of the present invention, for two structures to be the same, the diffraction maxima (referring to the angle position in degrees, i.e., the 2θ value) must be essentially the same between the two structures, since they correspond with the reticular spacing (distance d (Å)) associated with the *hkl* planes corresponding to the structure which is defined, but not so the relative intensities, because they also depend on other factors such as crystal size, the presence of heteroatoms or occluded material in the pores of the material, material crystallinity, etc.

Another more preferred embodiment for the values of angles 2θ (°) and distance d (Å) described above comprises, respectively, the following values of relative intensities (I/Iₒ)·100:

| Angle 2θ (±0.20) (°) | Distance d (±0.500) (Å) | Relative intensity |
|---|---|---|
| 4.77 | 18.532 | e |
| 5.83 | 15.150 | d |
| 7.53 | 11.740 | d |
| 8.25 | 10.708 | d |
| 10.11 | 8.753 | d |
| 10.65 | 8.304 | d |
| 11.18 | 7.917 | d |
| 12.15 | 7.284 | d |
| 12.62 | 7.017 | d |
| 13.98 | 6.327 | d |
| 14.31 | 6.190 | d |
| 14.70 | 6.025 | d |
| 15.83 | 5.600 | d |
| 17.22 | 5.151 | d |
| 17.55 | 5.053 | d |
| 18.18 | 4.879 | d |
| 18.57 | 4.775 | d |
| 19.12 | 4.642 | b |
| 20.57 | 4.317 | d |
| 20.85 | 4.260 | d |
| 21.67 | 4.102 | e |
| 22.46 | 3.959 | d |
| 22.97 | 3.873 | d |
| 23.02 | 3.861 | d |
| 23.95 | 3.715 | f |
| 24.21 | 3.676 | m |
| 24.67 | 3.608 | d |
| 24.93 | 3.572 | d |
| 25.83 | 3.450 | d |
| 26.07 | 3.418 | d |
| 26.73 | 3.336 | d |
| 27.16 | 3.284 | d |
| 28.23 | 3.162 | d |
| 29.05 | 3.074 | d |
| 29.26 | 3.052 | d |
| 29.84 | 2.994 | d |
| 30.44 | 2.936 | d |
| 31.02 | 2.883 | d |
| 31.58 | 2.833 | d |
| 32.34 | 2.768 | d |
| 33.06 | 2.710 | d |
| 33.42 | 2.682 | d |
| 33.78 | 2.653 | d |
| 34.45 | 2.603 | d |
| 34.99 | 2.565 | d |
| 35.44 | 2.531 | d |
| 35.68 | 2.517 | d |
| 36.54 | 2.459 | d |
| 37.02 | 2.428 | d |
| 37.73 | 2.385 | d |
| 37.86 | 2.375 | d |
| 38.78 | 2.322 | d |
| 39.45 | 2.284 | d |

and wherein relative intensities are represented by "e"=40-100, "f"=60-100, "m"=40-60, "b"=0-60, and "d"=0-40.

In the present invention, "relative intensity or (I/Iₒ)·100" is understood to mean the ratio obtained by dividing the intensity obtained for an angle 2θ in the X-ray diffraction diagram by the highest intensity obtained in said diagram and the result multiplied by 100, said operation is carried out for all intensities and independently in all the obtained diagrams, in such a way that each intensity of each diagram is in a range from 0 to 100.

In another preferred embodiment of the material of the invention, X is one or more trivalent elements selected from the group of Al, B, In, Ga, Fe, Cr, Ti, V, and combinations thereof. These elements induce acidic properties in the materials.

In another preferred embodiment of the material of the invention, characterized in that Y is one or more tetravalent elements selected from the group of Sn, Ti, V, and combinations thereof. These elements induce redox properties in the materials.

In another preferred embodiment of the material of the invention, the *cl(a+b)* and *d*/*(a+b)* ratios can take values between 0 and 0.2, both included.

In another preferred embodiment of the material of the invention, characterized in that *cl(a+b)* and *dl(a+b)* are 0.

In another preferred embodiment of the material of the invention, characterized in that X is Al, B, or a mixture of both.

In another preferred embodiment of the material of the invention, the organic agent (1S,2S)-N-ethyl-N-methyl-pseudoephedrinium or (1R,2R)-N-ethyl-N-methyl-pseudoephedrinium, is occluded in the pores of the final material, maintaining its chemical integrity. It is demonstrated in Example 16.

In another preferred embodiment of the material of the invention, the pores of the material are empty as a result of the elimination of the organic material occluded in said pores (and channels).

A second aspect of the invention relates to the catalyst characterized in that it comprises the GTM-3 crystalline microporous material described above, wherein the pores of the material are empty, and it is combined with one or more hydrogenating-dehydrogenating components.

In the present invention, "hydrogenating-dehydrogenating components" are understood to mean elements that can induce hydrogen transfer reactions, such as Pd, Pt, Co, or Ni.

A third aspect of the invention relates to the method for preparing the GTM-3 crystalline microporous material of the present invention, characterized in that it comprises the following steps:
a) preparing a synthesis gel by mixing, at least one source of Si, a source of Ge, a source of water, a source of the (1R,2R)-N-ethyl-N-methyl-pseudoephedrinium cation or a source of the (1S,2S)-N-ethyl-N-methyl-pseudoephedrinium cation, and a source of fluoride;
b) subjecting the synthesis gel obtained in step (a) to a temperature of between 58°C and 130°C for a time of between 6 hours and 1 month until the crystalline microporous material is formed;
c) recovering the GTM-3 crystalline microporous material obtained in step (b);
and further comprises, optionally, an additional step (d), after recovery step (c), of removing occluded organic matter from the material recovered in step (c), which can be performed by means of thermal treatment or by means of extraction, preferably by means of thermal calcination treatment at a temperature of between 250°C and 600°C for a time of between 1 h and 48 h. Preferably, the GTM-3 material is subjected to calcination in a quartz reactor at 500°C for 4 hours in an air flow.

An advantage of the method is the use of a chiral organic compound that can be readily prepared as a structure-directing agent, and from chiral precursors derived from natural products available in two enantiomeric forms, (1S,2S) and (1R,2R). The source of the corresponding organic cation (1S,2S)-N-ethyl-N-methyl-pseudoephedrinium or its enantiomer (1R,2R)-N-ethyl-N-methyl-pseudoephedrinium, is in the form of hydroxide or ROH, wherein R refers to the organic cation and is (1S,2S)-N-ethyl-N-methyl-pseudoephedrinium hydroxide or (1R,2R)-N-ethyl-N-methyl-pseudoephedrinium hydroxide, respectively. Optionally, instead of (1S,2S)-N-ethyl-N-methyl-pseudoephedrinium hydroxide or (1R,2R)-N-ethyl-N-methyl-pseudoephedrinium hydroxide, it refers to a halide, such as, for example, fluoride, chloride, bromide, iodide, or analogous anions of the organic cation.

In a more preferred embodiment of the method, the source of fluoride (ZF) in step (a) is hydrofluoric acid or ammonium fluoride. In an even more preferred embodiment, the source of fluoride is HF (hydrofluoric acid). The source of fluoride acts as a mineralizing agent.

The source of silicon is selected from tetraethylorthosilicate, Aerosil SiO₂, colloidal SiO₂, or any other source of Si known to any person skilled in the art. In a preferred embodiment, the source of Si is tetraethylorthosilicate.

In another preferred embodiment of the method, the preparation of the synthesis gel of step (a) comprises a source of Ge. Preferably, the source of Ge is Ge dioxide.

In another preferred embodiment, the preparation of the synthesis gel of step (a) further comprises adding variable amounts of other trivalent elements (X) which can be selected from Al, B, In, Ga, Fe, Cr, Ti, V, and combinations thereof, and/or of tetravalents (Y) other than Si or Ge, which can be selected from Sn, Ti, V, and combinations thereof, to induce acid and redox properties in the material of the invention.

In another preferred embodiment of the method, after step (a) and before step (b), a corresponding amount of crystals of previously obtained GTM-3 material, which will act as seedings, is added and stirred until homogeneous; the use of seedings favors the crystallization of the material of the invention, increasing its crystallinity and reducing crystallization time. They can be added to the synthesis mixture, in a proportion of up to 25% (in percentage by weight with respect to the total oxides). In a more preferred embodiment, 10% (in percentage by weight with respect to the total oxides) of previously obtained GTM-3 crystals are added as seeding.

In another preferred embodiment of the method, it further comprises in step (a) stirring the synthesis mixture obtained until it is homogeneous.

In another preferred embodiment of the method, the preparation of the synthesis gel of step (a) comprises the following sub-steps:
i. adding to an aqueous solution of a salt of the cation (1S,2S)-N-ethyl-N-methyl-pseudoephedrinium or its enantiomer (1R,2R)-N-ethyl-N-methyl-pseudoephedrinium at least one source of Ge in the gel;
ii. adding to the mixture obtained in step (i) variable amounts of at least one source of silicon, preferably with high Si/Ge ratios, equal to or greater than 3; and
iii. adding to the mixture obtained in step (ii) a source of fluoride as a mineralizing agent.

In a more preferred embodiment of the method, step ii) of the preparation of the synthesis gel further comprises adding variable amounts of other trivalent elements (X) which can be selected from Al, B, In, Ga, Fe, Cr, Ti, V, and combinations thereof, and/or of tetravalents (Y) other than Si or Ge, which can be selected from Sn, Ti, V, and combinations thereof, to induce acid and redox properties in the material.

In another more preferred embodiment, in step i) of the preparation of the synthesis gel, the source of cation R is an aqueous solution of (1S,2S)-N-ethyl-N-methyl-pseudoephedrinium hydroxide or (1R,2R)-N-ethyl-N-methyl-pseudoephedrinium hydroxide at a given concentration. In another more preferred embodiment of the preparation of the synthesis gel, the aqueous solution of the organic agent has a concentration of about 25-35 wt%. In an even more preferred embodiment, the source of R is an aqueous solution of (1S,2S)-N-ethyl-N-methyl-pseudoephedrinium hydroxide or (1R,2R)-N-ethyl-N-methyl-pseudoephedrinium hydroxide at a concentration of about 30 wt%.

In another more preferred embodiment, after step i) and before step iii) of the preparation of the synthesis gel, the synthesis mixture is stirred until it is homogeneous and the desired composition is obtained, if the selected source of silicon in sub-step (ii) is tetraethylorthosilicate, the loss of ethanol by the decomposition of tetraethylorthosilicate is monitored.

In a preferred embodiment of the method, the synthesis gel of step (a) is *A* SiO₂ : *B* Geo₂ : *C* X₂O₃ : *D* YO₂ : *E* ROH : *F* ZF : *G* H₂O, wherein ROH and ZF have been described above, and wherein the values *A, B, C, D, E, F, and G* refer to the relative molar composition of each of the components of the synthesis gel, and wherein the ratio *B*/*A* has a value greater than 0 and less than or equal to 2, the ratio *E*/*(A+B)* has values between 0.1 and 1, both included, the ratio *G*/*(A+B)* has values between 0.5 and 10, both included, and the ratio *F*/*(A+B)* has values between 0.1 and 1, both included, wherein X is one or more trivalent elements described above, Y is one or more tetravalent elements other than Si or Ge described above, and wherein *C*/*(A+B)* and *D*/*(A+B)* have values between 0 and 0.2, both included. In an even more preferred embodiment, the ratio *G*/*(A+B)* has a value between 3 and 7, both included. In another even more preferred embodiment, the ratio *F*/*(A+B)* has a value of 0.25. In another even more preferred embodiment, the ratio *E*/*(A+B)* has a value of 0.25.

In another preferred embodiment of the method, the synthesis gel of step (a) is *A* SiO₂ : *B* Geo₂ : *C* X₂O₃ : *E* ROH : *F* ZF : *G* H₂O, wherein ROH, ZF, and X have been described above, the values *A, B*, *C, E, F, and G* refer to the relative molar composition of each of the components of the synthesis gel, and wherein the ratio *B*/*A* has values between 0.1 and 1, both included, the ratio *E*/*(A+B)* has values between 0.1 and 0.5, both included, the ratio *F*/*(A+B)* has values between 0.1 and 0.5, both included, the ratio *G*/*(A+B)* has values between 0.5 and 10, both included, *X* is Al or B, and the ratio *C*/*(A+B)* has values between 0 and 0.2, both included. In another more preferred embodiment, *X* is B or Al, and the ratio *C*/*(A+B)* has a value between 0.005 and 0.03, both included. In another still even more preferred embodiment, X is B or Al, and the ratio *C*/*(A+B)* has a value of 0.007.

In another preferred embodiment of the method, the synthesis gel of step (a) is *A* SiO₂ : *B* Geo₂ : *D* YO₂ : *E* ROH : *F* ZF : *G* H₂O, wherein ROH, ZF, and Y have been described above, the values *A, B, D, E, F, and G* refer to the relative molar composition of each of the components of the synthesis gel, and wherein the ratio *B*/*A* has values between 0.1 and 1, both included, the ratio *E*/*(A+B)* has values between 0.1 and 0.5, both included, the ratio *F*/*(A+B)* has values between 0.1 and 0.5, both included, the ratio *G*/*(A+B)* has values between 0.5 and 10, both included, Y is Ti or Sn, and the ratio *D*/*(A+B)* has values between 0 and 0.2, both included. In another more preferred embodiment, Yis Sn or Ti, and the ratio *D*/*(A+B)* has a value between 0.005 and 0.03, both included. In another even more preferred embodiment, *Y* is Sn or Ti, and the ratio *D*/*(A+B)* has a value of 0.007.

In another more preferred embodiment of the method, the synthesis gel of step (a) is *A* SiO₂ : *B* Geo₂: *E* ROH : *F* ZF : *G* H₂O, wherein ROH and ZF have been described above, the values *A, B, E, F, and G* refer to the relative molar composition of each of the components of the synthesis gel, and wherein the ratio *B*/*A* has values between 0.1 and 1, both included, the ratio *E*/*(A+B)* has values between 0.1 and 0.5, both included, the ratio *F*/*(A+B)* has values between 0.1 and 0.5, both included, and the ratio *G*/*(A+B)* has values between 0.5 and 10, both included. In another even more preferred embodiment, the ratio *B*/*A* has values between 0.33 and 0.125, both included. In another even more preferred embodiment, the ratio *E*/*(A+B)* has a value of 0.25.

In another embodiment of step (b) of the method of the present invention, the mixture obtained in step (a) or sub-step (iii) is thermally treated at a temperature of between 58°C and 130°C for a time of between 6 h and 1 month, preferably at a temperature equal to or less than 110°C, and equal to or greater than 60°C for a time of between 1 and 15 days, more preferably at a temperature equal to or less than 100°C and equal to or greater than 60°C for a time of between 4 and 15 days, and even more preferably at a temperature of 100°C for a time of 6 days.

In another more preferred embodiment, after step (a) or sub-step (iii) of the preparation of the synthesis gel and before step (b), the synthesis mixture obtained in step (a) or (iii) is transferred to a suitable container, more preferably, if the crystallization temperature is greater than 80°C, it is transferred to an autoclave with or without stirring or if the crystallization temperature is equal to or less than 80°C, it is transferred to other containers, such as Pyrex jars, with or without stirring.

In another more preferred embodiment, the time at which the synthesis mixture of step (b) is subjected to thermal treatment is equal to or greater than 6 hours. In another even more preferred embodiment, the time is greater than 18 hours and less than 30 days. In another still even more preferred embodiment, the time is 6 days.

In another embodiment of the method for obtaining the material of the present invention, recovery step (c) is performed by means of filtration or centrifugation. Preferably, it is performed by means of filtration, more preferably the obtained solids are filtered, washed with abundant ethanol and water, and air dried.

In another preferred embodiment of the method for obtaining the material of the present invention, ROH is the quaternary ammonium cation (1S,2S)-N-ethyl-N-methyl-pseudoephedrinium or (1R,2R)-N-ethyl-N-methyl-pseudoephedrinium hydroxides, which are obtained by means of alkylation reactions from (1S,2S)-pseudoephedrine or (1R,2R)-pseudoephedrine, and the subsequent conversion thereof to the hydroxide form.

In another preferred embodiment of the method, in step (a) the source of Si is tetraethylorthosilicate, and the source of Ge is Ge dioxide. In a more preferred embodiment of the method, in step (a), the aqueous solution of the organic agent, (1S,2S)-N-ethyl-N-methyl-pseudoephedrinium hydroxide or (1R,2R)-N-ethyl-N -methyl-pseudoephedrinium hydroxide, is at a concentration of between 25 wt% and 30 wt%. In an even more preferred embodiment, the source of fluorine is 48 wt% hydrofluoric acid and the composition of the gel is 0.25 ROH: 0.833 SiO₂ : 0.167 GeO₂ : 0.25 HF : 6.5 H₂O. In a still even more preferred embodiment, the thermal treatment is at 100°C for 6 days; the solids obtained after said thermal treatment are filtered, washed with ethanol and water, and air dried.

In another preferred embodiment of the method, in step (a) the source of Si is tetraethylorthosilicate, the source of Ge is Ge dioxide, and the source of Al is Al isopropoxide. In a more preferred embodiment of the method, in step (a), the aqueous solution of the organic agent, (1S,2S)-N-ethyl-N-methyl-pseudoephedrinium hydroxide or (1R,2R)-N-ethyl-N-methyl-pseudoephedrinium hydroxide, is at a concentration of between 25 wt% and 30 wt%. In an even more preferred embodiment, the source of fluorine is 48 wt% hydrofluoric acid and the composition of the gel is 0.25 ROH: 0.833 SiO₂ : 0.167 GeO₂ : 0.007 Al₂O₃ : 0.25 HF : 6.5 H₂O. In a still even more preferred embodiment, the thermal treatment is at 100°C for 14 days; the solids obtained after said thermal treatment are filtered, washed with ethanol and water, and air dried.

In another preferred embodiment of the method, in step (a) the source of Si is tetraethylorthosilicate, and the source of Ge is Ge dioxide. In a more preferred embodiment of the method, in step (a), the aqueous solution of the organic agent, (1S,2S)-N-ethyl-N-methyl-pseudoephedrinium hydroxide or (1R,2R)-N-ethyl-N-methyl-pseudoephedrinium hydroxide, is at a concentration of between 25 wt% and 30 wt%. In an even more preferred embodiment, the source of fluorine is 48 wt% hydrofluoric acid and the composition of the gel is 0.25 ROH: 0.833 SiO₂ : 0.167 GeO₂ : 0.25 HF : 6.5 H₂O. In a still even more preferred embodiment, the corresponding amount of GTM-3 seedings (previously prepared) is added to the obtained mixture, stirred until it is homogeneous, and the synthesis mixture obtained is subjected to thermal treatment at 100°C for 3 days; the solids obtained after said thermal treatment are filtered, washed with ethanol and water, and air dried.

A fourth aspect of the invention relates to the use of the GTM-3 material in organic compound adsorption processes. In a preferred embodiment, the use is use as enantioselective adsorbent of chiral organic compounds.

A fifth aspect of the invention relates to the use of the GTM-3 material as a catalyst in reactions with organic compounds. In a preferred embodiment, the use is use as an asymmetric catalyst in reactions with chiral organic compounds.

The use of a highly specific enantiopure chiral compound, (1S,2S)-N-ethyl-N-methyl-pseudoephedrinium or its enantiomer (1R,2R)-N-ethyl-N-methyl-pseudoephedrinium, as a structure-directing agent, leads to the GTM-3 material thus obtained being enriched in either one of the enantiomorphic crystalline forms thereof (with space group P4,32 or P4₃32) depending on whether one enantiomer of the organic agent or another is used, as demonstrated by a series of enantioselective crystallization experiments in the presence of crystal seedings (see Examples 14 and 15). In that sense, the enrichment of GTM-3 in one of the enantiomorphic crystalline forms means that it can be used in asymmetric catalysis or adsorption processes to discriminate between enantiomers of chiral compounds.

The technical advantages of the use of the GTM-3 material described in the present invention is that the specific use of these chiral organic agents allows the crystallization of the GTM-3 material enriched in one enantiomorphic crystalline form or another by means of using the chiral precursor having a (1S,2S) or (1R,2R) configuration, respectively.

Another aspect of the present invention relates to the use of the material of the invention in adsorption and asymmetric catalysis enantioselective discrimination processes.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

**Figure 1****.** Molecular structure of the organic agent that has given rise to the ITV structure in the present invention (in its two enantiomeric forms ADE5-SS and ADE5-RR), and of other very similar organic compounds that do not give rise to the ITV structure (ADE6-8), which demonstrates the high specificity of ADE5 to the ITV structure.
**Figure 2****.** Molecular structure of the organic agents that have given rise to the ITV structure to date, reported in the bibliography.
**Figure 3****.** Detail of the synthesis scheme of the chiral structure-directing agent shown for the (1S,2S) enantiomer, the synthesis scheme for the (1R,2R) enantiomer being exactly the same.
**Figure 4****.** Characteristic X-ray diffraction pattern of the GTM-3 material prepared at 100°C with a Si/Ge ratio in the gel of 5.
Figure 5. 27Al solid state nuclear magnetic resonance at the magic angle of the AI-GTM-3(SS) material obtained as indicated in Example 10.
**Figure 6****.** X-ray diffraction patterns from enantioselective crystallization experiments. Top: using a GTM-3(SS) seeding, using the same enantiomer (SS) for the synthesis gel (gray, case A in Example 14) or the opposite enantiomer (RR) (black, case B in Example 14). Bottom: using a GTM-3(RR) seeding, using the opposite enantiomer (SS) for the synthesis gel (gray, case C in Example 15) or the same enantiomer (RR) (black, case D in Example 15).
**Figure 7****.** 13C solid state nuclear magnetic resonance at the magic angle of the GTM-3(SS) material obtained according to Example 3 (black line), and of a (1S,2S)-N-ethyl-N-methyl-pseudoephedrinium cation solution in D₂O (gray line), as explained in Example 16.
**Figure 8****.** X-ray diffraction patterns of the GTM-3 material (prepared at 100°C with a Si/Ge ratio in the gel of 5 according to Example 3) recorded *in-situ* during the calcination process (as explained in Example 17): bottom: original GTM-3(SS) (black line); middle: GTM-3(SS) at 550°C (gray line); top: GTM-3(SS) subjected to calcination at 550°C and subsequently cooled to room temperature (light gray line).
**Figure 9****.** X-ray diffraction pattern of the GTM-3 material, prepared at 100°C with a Si/Ge ratio in the gel of 5, as indicated in Example 3, after air calcination at 500°C for 4 hours, as explained in Example 18.
**Figure 10****.** N₂ adsorption/desorption isotherm of the calcined GTM-3(SS) material, as explained in Example 18.

### EXAMPLES

The following describes several examples illustrating the details of the preparation of the chiral organic agents, several GTM-3 materials object of the present invention in different compositions, as well as the evidence for the enrichment of GTM-3 in one enantiomorphic crystalline form or another depending on the use of one enantiomer of the organic agent or another. However, these examples do not limit the present invention. Hereinafter, the GTM-3 material obtained in the presence of the (1S,2S)-N-ethyl-N-methyl-pseudoephedrinium enantiomer will be referred to as GTM-3(SS), and the material obtained in the presence of the (1R,2R)-N-ethyl-N-methylpseudoephedrinium enantiomer will be referred to as GTM-3(RR).

### Example 1: Synthesis of the structure-directing agent: (1S,2S)-N-ethyl-N-methylpseudoephedrinium hydroxide.

The synthesis of the structure-directing agent starts from the alkaloid (1S,2S)-pseudoephedrine or (1R,2R)-pseudoephedrine; the choice of the starting enantiomer of the precursor determines the final absolute configuration of the structure-directing agent. The synthesis consists of three steps, a first addition of a methyl group, a second addition of an ethyl group (Figure 3), and a final ion exchange of iodide to the corresponding hydroxide.

In atypical synthesis of (1S,2S)-N-ethyl-N-methyl-pseudoephedrinium hydroxide, 15.10 g of formaldehyde (37 wt% in aqueous solution) and 23.00 g of formic acid (95 wt%) are mixed in a flask under magnetic stirring. The flask is cooled in an ice bath, and then 25.00 g of (1S,2S)-pseudoephedrine are added very slowly. The mixture is refluxed overnight. Next, 18.20 g of hydrochloric acid (37 wt%) are added, keeping the flask with the mixture in an ice bath. Next, successive extractions of the product are performed by washing with diethyl ether. The aqueous phase is then collected to which an aqueous sodium hydroxide solution (25 wt%) is added until reaching a pH of 12, giving rise to the formation of an oily product. Lastly, the product is extracted in a decantation funnel with diethyl ether, collecting the organic phase. Next, traces of water are removed from the organic phase with potassium carbonate (K₂CO₃), and the solvent is removed on a rotary evaporator. An oil containing (1S,2S)-N-methyl-pseudoephedrine is thus obtained, with a yield of about 80%.

In the second step of the reaction, 20.00 g of (1S,2S)-N-methyl-pseudoephedrine are dissolved in 400 ml of acetonitrile, and 34.85 g of iodoethane is added little by little while keeping the mixture under stirring and cooling with an ice bath. The mixture is allowed to warm to room temperature and is thus kept under stirring for 5 days. The solvent is then evaporated in a rotary evaporator, yielding a precipitate which is washed with diethyl ether. The product, (1S,2S)-N-ethyl-N-methyl-pseudoephedrinium iodide, is obtained with yields of about 90%.

The last step of the synthesis consists of the anionic exchange of iodide for hydroxide using an anion resin (Amberlite IRN-78). 34.30 g of (1S,2S)-N-ethyl-N-methyl-pseudoephedrinium iodide are dissolved in 400 ml of water under stirring and at a temperature of 50°C. Then, 102 g of anionic resin is added and it is kept under stirring for 7 days at room temperature. Once the exchange has completed, the resulting aqueous solution is concentrated by evaporating part of the water in a rotary evaporator at 40°C until reaching the desired concentration (between 25 and 30 wt%).

### Example 2: Synthesis of the structure-directing agent: (1R,2R)-N-ethyl-N-methyl-pseudoephedrinium hydroxide.

The synthesis of (1R,2R)-N-ethyl-N-methyl-pseudoephedrinium hydroxide is carried out in exactly the same way as in Example 1, but starting in this case from the enantiomer (1R,2R)-pseudoephedrine.

In a typical synthesis of (1R,2R)-N-ethyl-N-methyl-pseudoephedrinium hydroxide, 15.10 g of formaldehyde (37 wt% in aqueous solution) and 23.00 g of formic acid (95 wt%) are mixed in a flask under magnetic stirring. The flask is cooled in an ice bath, and then 25.00 g of (1R,2R)-pseudoephedrine are added very slowly. The mixture is refluxed overnight. Next, 18.20 g of hydrochloric acid (37 wt%) are added, keeping the flask with the mixture in an ice bath. Next, successive extractions of the product are performed by washing with diethyl ether. The aqueous phase is then collected to which an aqueous sodium hydroxide solution (25 wt%) is added until reaching a pH of 12, giving rise to the formation of an oily product. Lastly, the product is extracted in a decantation funnel with diethyl ether, collecting the organic phase. Next, traces of water are removed from the organic phase with potassium carbonate (K₂CO₃), and the solvent is removed on a rotary evaporator. An oil containing (1R,2R)-N-methyl-pseudoephedrine is thus obtained, with a yield of about 80%.

In the second step of the reaction, 20.00 g of (1R,2R)-N-methyl-pseudoephedrine are dissolved in 400 ml of acetonitrile, and 34.85 g of iodoethane is added little by little while keeping the mixture under stirring and cooling with an ice bath. The mixture is allowed to warm to room temperature and is thus kept under stirring for 5 days. The solvent is then evaporated in a rotary evaporator, yielding a precipitate which is washed with diethyl ether. The product, (1R,2R)-N-ethyl-N-methyl-pseudoephedrinium iodide, is obtained with yields of about 90%.

The last step of the synthesis consists of the anionic exchange of iodide for hydroxide using an anion resin (Amberlite IRN-78). 34.30 g of (1R,2R)-N-ethyl-N-methyl-pseudoephedrinium iodide are dissolved in 400 ml of water under stirring and at a temperature of 50°C. Then, 102 g of anionic resin is added and it is kept under stirring for 7 days at room temperature. Once the exchange has completed, the resulting aqueous solution is concentrated by evaporating part of the water in a rotary evaporator at 40°C until reaching the desired concentration (between 25 and 30 wt%).

The following Examples 3 to 13 include different preparations of the GTM-3 material using various synthesis conditions.

### Example 3: Preparation of the GTM-3 material with a Si/Ge ratio in the gel of 5 from (1S,2S)-N-ethyl-N-methyl-pseudoephedrinium.

This example shows a typical preparation of GTM-3 with a Si/Ge ratio in the gel of 5, and using the (1S,2S)-N-ethyl-N-methyl-pseudoephedrinium enantiomer as the organic agent.

0.57 g of GeO₂ are dissolved in 6.36 g of aqueous (1S,2S)-N-ethyl-N-methyl-pseudoephedrinium hydroxide solution with a concentration of 28.8 wt%. Next, 5.76 g of tetraethylorthosilicate are added, leaving the mixture under stirring to remove ethanol. Finally, 0.34 g of hydrofluoric acid (48 wt%) are added and stirred until homogeneous with the help of a spatula. The prepared gel has the following composition: 0.25 ROH : 0.833 SiO₂ : 0.167 GeO₂ : 0.25 HF : 6.5 H₂O, wherein ROH is (1S,2S)-N-ethyl-N-methyl-pseudoephedrinium hydroxide.

The gel is transferred to Teflon sleeves which are inserted into steel autoclaves and heated at 100°C for 6 days under static conditions. The obtained solid is filtered, washed with ethanol and water, and dried. The solid obtained, GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.78 | 18.485 | f |
| 5.84 | 15.126 | d |
| 7.54 | 11.726 | d |
| 8.27 | 10.677 | d |
| 10.08 | 8.772 | d |
| 10.64 | 8.317 | d |
| 11.14 | 7.941 | d |
| 12.12 | 7.301 | d |
| 12.58 | 7.038 | d |
| 13.96 | 6.338 | d |
| 14.26 | 6.210 | d |
| 14.65 | 6.045 | d |
| 15.79 | 5.611 | d |
| 17.13 | 5.177 | d |
| 17.48 | 5.075 | d |
| 18.12 | 4.896 | d |
| 18.48 | 4.797 | d |
| 19.05 | 4.659 | m |
| 20.47 | 4.340 | d |
| 20.77 | 4.273 | d |
| 21.58 | 4.117 | f |
| 22.32 | 3.982 | d |
| 22.99 | 3.865 | d |
| 23.87 | 3.728 | f |
| 24.13 | 3.688 | f |
| 24.57 | 3.623 | m |
| 24.81 | 3.588 | m |
| 25.71 | 3.465 | d |
| 25.97 | 3.431 | d |
| 26.65 | 3.393 | d |
| 27.04 | 3.298 | m |
| 28.08 | 3.175 | d |
| 28.92 | 3.088 | d |
| 29.14 | 3.063 | d |
| 29.67 | 3.009 | d |
| 30.32 | 2.948 | d |
| 30.94 | 2.888 | d |
| 31.39 | 2.850 | d |
| 32.20 | 2.780 | d |
| 32.97 | 2.715 | d |
| 33.27 | 2.693 | d |
| 33.72 | 2.658 | d |
| 34.33 | 2.610 | d |
| 34.84 | 2.575 | d |
| 35.52 | 2.525 | d |
| 35.60 | 2.520 | d |
| 36.33 | 2.473 | d |
| 36.84 | 2.440 | d |
| 37.53 | 2.396 | d |
| 38.60 | 2.333 | d |
| 39.22 | 2.295 | d |

This material has an average Si/Ge ratio of 2.8, measured by SEM-EDX (scanning electron microscopy with energy dispersive X-ray analyzer), giving a Ge content significantly lower than that of zeolite ITQ-37. In turn, it has a C/N ratio of 12.8 (13 being the theoretical value of the organic cation), and an organic content of 19.3% (measured by CHN elemental analysis). The complete incorporation of the organic cation in the GTM-3 material is verified by means of nuclear magnetic resonance in Example 16, and the resistance of the GTM-3 material to the removal of the organic material in Examples 17 and 18.

### Example 4: Preparation of the GTM-3 material from (1R,2R)-N-ethyl-N-methyl-pseudoephedrinium with a Si/Ge ratio in the gel of 5.

In this example, the (1R,2R)-N-ethyl-N-methyl-pseudoephedrinium enantiomer is used as the organic agent, under the same synthesis conditions as in Example 3.

0.57 g of GeO₂ are dissolved in 6.25 g of aqueous (1R,2R)-N-ethyl-N-methyl-pseudoephedrinium hydroxide solution with a concentration of 29.3 wt%. Next, 5.76 g of tetraethylorthosilicate are added, leaving the mixture under stirring to remove ethanol. Finally, 0.34 g of hydrofluoric acid (48 wt%) are added and stirred until homogeneous with the help of a spatula. The prepared gel has the following composition: 0.25 ROH : 0.833 SiO₂ : 0.167 GeO₂ : 0.25 HF : 6.5 H₂O, wherein ROH is (1R,2R)-N-ethyl-N-methyl-pseudoephedrinium hydroxide.

The gel is transferred to Teflon sleeves which are inserted into steel autoclaves and heated at 100°C for 6 days under static conditions. The obtained solid is filtered, washed with ethanol and water, and dried. The solid obtained, GTM-3(RR), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.71 | 18.765 | f |
| 5.78 | 15.303 | d |
| 7.43 | 11.892 | d |
| 8.18 | 10.800 | d |
| 10.04 | 8.815 | d |
| 10.58 | 8.359 | d |
| 11.08 | 7.985 | d |
| 12.04 | 7.350 | d |
| 12.51 | 7.068 | d |
| 13.88 | 6.377 | d |
| 14.21 | 6.232 | d |
| 14.63 | 6.056 | d |
| 15.73 | 5.632 | d |
| 17.10 | 5.186 | m |
| 17.39 | 5.099 | d |
| 18.11 | 4.896 | d |
| 18.97 | 4.677 | d |
| 20.47 | 4.338 | d |
| 20.67 | 4.295 | d |
| 21.54 | 4.125 | m |
| 22.36 | 3.973 | d |
| 22.87 | 3.886 | d |
| 23.82 | 3.736 | f |
| 24.07 | 3.697 | f |
| 24.56 | 3.624 | m |
| 25.90 | 3.440 | d |
| 26.95 | 3.309 | m |
| 29.03 | 3.076 | d |
| 30.28 | 2.952 | d |
| 31.29 | 2.859 | d |
| 32.06 | 2.792 | d |
| 33.24 | 2.694 | d |
| 33.70 | 2.660 | d |
| 34.78 | 2.580 | d |
| 35.20 | 2.547 | d |
| 36.28 | 2.476 | d |
| 36.75 | 2.443 | d |
| 37.43 | 2.402 | d |
| 38.53 | 2.337 | d |
| 39.16 | 2.299 | d |

### Example 5: Preparation of the GTM-3 material with a Si/Ge ratio in the gel of 5 from (1S,2S)-N-ethyl-N-methyl-pseudoephedrinium, with a water content in the gel of 3.

In this example, the water content in the molar composition of the gel is reduced from 6.5 (such as in Examples 3 and 4) to 3.

0.67 g of GeO₂ are dissolved in 7.56 g of aqueous (1S,2S)-N-ethyl-N-methyl-pseudoephedrinium hydroxide solution with a concentration of 28.8 wt%. Next, 6.84 g of tetraethylorthosilicate are added, leaving the mixture under stirring for the time necessary to remove ethanol and water required to obtain the desired composition. Finally, 0.40 g of hydrofluoric acid (48 wt%) are added and stirred until homogeneous with the help of a spatula. The prepared gel has the following composition: 0.25 ROH : 0.833 SiO₂ : 0.167 GeO₂ : 0.25 HF : 3.0 H₂O, wherein ROH is (1S,2S)-N-ethyl-N-methyl-pseudoephedrinium hydroxide.

The gel is transferred to Teflon sleeves which are inserted into steel autoclaves and heated at 100°C for 14 days under static conditions. The obtained solid is filtered, washed with ethanol and water, and dried. The solid obtained, GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.77 | 18.532 | f |
| 5.83 | 15.150 | d |
| 7.53 | 11.740 | d |
| 8.25 | 10.708 | d |
| 10.11 | 8.753 | d |
| 10.65 | 8.304 | d |
| 11.18 | 7.917 | d |
| 12.15 | 7.284 | d |
| 12.62 | 7.017 | d |
| 13.98 | 6.327 | d |
| 14.31 | 6.190 | d |
| 14.70 | 6.025 | d |
| 15.83 | 5.600 | d |
| 16.90 | 5.242 | d |
| 17.22 | 5.151 | d |
| 17.55 | 5.053 | d |
| 18.18 | 4.879 | d |
| 18.57 | 4.775 | d |
| 19.12 | 4.642 | m |
| 20.57 | 4.317 | d |
| 20.85 | 4.260 | d |
| 21.67 | 4.102 | m |
| 21.95 | 4.047 | d |
| 22.46 | 3.959 | d |
| 22.97 | 3.873 | d |
| 23.02 | 3.861 | d |
| 23.53 | 3.778 | d |
| 23.95 | 3.715 | f |
| 24.21 | 3.676 | m |
| 24.67 | 3.608 | d |
| 24.93 | 3.572 | d |
| 25.83 | 3.450 | d |
| 26.07 | 3.418 | d |
| 26.73 | 3.336 | d |
| 27.16 | 3.284 | d |
| 27.44 | 3.248 | d |
| 28.23 | 3.162 | d |
| 29.05 | 3.074 | d |
| 29.26 | 3.052 | d |
| 29.84 | 2.994 | d |
| 30.44 | 2.936 | d |
| 31.02 | 2.883 | d |
| 31.58 | 2.833 | d |
| 32.34 | 2.768 | d |
| 33.06 | 2.710 | d |
| 33.42 | 2.682 | d |
| 33.78 | 2.653 | d |
| 34.45 | 2.603 | d |
| 34.99 | 2.565 | d |
| 35.44 | 2.531 | d |
| 35.68 | 2.517 | d |
| 36.54 | 2.459 | d |
| 37.02 | 2.428 | d |
| 37.73 | 2.385 | d |
| 37.86 | 2.375 | d |
| 38.78 | 2.322 | d |
| 39.45 | 2.284 | d |

### Example 6: Preparation of the GTM-3 material with a Si/Ge ratio in the gel of 5 from (1S,2S)-N-ethyl-N-methyl-pseudoephedrinium, using Aerosil SiO₂ as source of Si.

In this example, Aerosil SiO₂ is used as a source of Si (instead of tetraethylorthosilicate such as in the preceding examples).

0.82 g of GeO₂ are dissolved in 9.21 g of aqueous (1S,2S)-N-ethyl-N-methyl-pseudoephedrinium hydroxide solution with a concentration of 28.8 wt%. Next, 2.36 g of Aerosil SiO₂ and 0.12 g of water (miliQ) are added, leaving the mixture under stirring until homogeneous. Finally, 0.49 g of hydrofluoric acid (48 wt%) are added and stirred until homogeneous with the help of a spatula. The prepared gel has the following composition: 0.25 ROH : 0.833 SiO₂ : 0.167 GeO₂ : 0.25 HF : 6.5 H₂O, wherein ROH is (1S,2S)-N-ethyl-N-methyl-pseudoephedrinium hydroxide.

The gel is transferred to Teflon sleeves which are inserted into steel autoclaves and heated at 100°C for 7 days under static conditions. The obtained solid is filtered, washed with ethanol and water, and dried. The solid obtained, GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.67 | 18.934 | m |
| 5.73 | 15.428 | d |
| 7.41 | 11.935 | d |
| 8.08 | 10.927 | d |
| 9.96 | 8.884 | d |
| 10.51 | 8.417 | d |
| 11.01 | 8.035 | d |
| 12.00 | 7.378 | d |
| 12.46 | 7.101 | d |
| 14.12 | 6.274 | d |
| 14.53 | 6.097 | d |
| 15.60 | 5.681 | d |
| 17.00 | 5.215 | d |
| 17.32 | 5.119 | d |
| 17.96 | 4.939 | d |
| 18.89 | 4.698 | m |
| 20.34 | 4.366 | d |
| 20.60 | 4.307 | d |
| 21.43 | 4.147 | f |
| 22.21 | 4.003 | d |
| 23.22 | 3.828 | d |
| 23.69 | 3.756 | f |
| 23.95 | 3.716 | f |
| 24.41 | 3.647 | m |
| 24.64 | 3.612 | m |
| 25.55 | 3.486 | m |
| 25.77 | 3.457 | m |
| 26.49 | 3.363 | d |
| 26.87 | 3.318 | m |
| 28.84 | 3.096 | d |
| 29.55 | 3.021 | d |
| 30.14 | 2.966 | d |
| 30.73 | 2.907 | d |
| 31.21 | 2.866 | d |
| 31.95 | 2.801 | d |
| 33.12 | 2.703 | d |
| 33.52 | 2.674 | d |
| 34.65 | 2.589 | d |
| 35.39 | 2.535 | d |
| 36.18 | 2.483 | d |
| 36.68 | 2.450 | d |
| 37.33 | 2.409 | d |
| 38.39 | 2.345 | d |
| 38.91 | 2.313 | d |
| 39.86 | 2.262 | d |

### Example 7: Preparation of the GTM-3 material with a Si/Ge ratio in the gel of 5 from (1S,2S)-N-ethyl-N-methyl-pseudoephedrinium, using NH₄F as a source of fluoride.

In this example, ammonium fluoride is used as the source of fluoride (instead of hydrofluoric acid such as in the preceding examples).

0.47 g of GeO₂ are dissolved in 5.33 g of aqueous (1S,2S)-N-ethyl-N-methyl-pseudoephedrinium hydroxide solution with a concentration of 28.8 wt%. Next, 4.83 g of tetraethylorthosilicate and 0.11 g of water (MilliQ) are added, leaving the mixture under stirring for the time necessary to remove ethanol. Finally, 0.26 g of ammonium fluoride are added and stirred until homogeneous with the help of a spatula. The prepared gel has the following composition: 0.25 ROH : 0.833 SiO₂ : 0.167 GeO₂ : 0.25 NH₄F: 6.5 H₂O, wherein ROH is (1S,2S)-N-ethyl-N-methyl-pseudoephedrinium hydroxide.

The gel is transferred to Teflon sleeves which are inserted into steel autoclaves and heated at 100°C for 7 days under static conditions. The obtained solid is filtered, washed with ethanol and water, and dried. The solid obtained, GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.74 | 18.651 | f |
| 5.80 | 15.226 | d |
| 7.50 | 11.795 | d |
| 10.06 | 8.794 | d |
| 10.61 | 8.335 | d |
| 11.14 | 7.945 | m |
| 12.10 | 7.308 | d |
| 12.56 | 7.051 | d |
| 14.28 | 6.205 | d |
| 14.66 | 6.041 | d |
| 15.79 | 5.612 | d |
| 16.24 | 5.452 | d |
| 17.17 | 5.165 | d |
| 17.50 | 5.069 | d |
| 19.07 | 4.655 | m |
| 19.91 | 4.460 | d |
| 20.53 | 4.324 | d |
| 21.62 | 4.111 | f |
| 22.41 | 3.967 | d |
| 22.90 | 3.880 | d |
| 23.90 | 3.723 | f |
| 24.16 | 3.684 | f |
| 24.60 | 3.618 | m |
| 24.85 | 3.580 | d |
| 25.83 | 3.447 | d |
| 26.00 | 3.428 | d |
| 27.09 | 3.292 | m |
| 28.48 | 3.134 | m |
| 29.20 | 3.059 | d |
| 30.34 | 2.946 | d |
| 31.48 | 2.839 | d |
| 32.33 | 2.769 | d |
| 32.88 | 2.724 | d |
| 33.34 | 2.685 | d |
| 33.79 | 2.652 | d |
| 34.38 | 2.606 | d |
| 34.94 | 2.568 | d |
| 36.40 | 2.469 | d |
| 36.96 | 2.432 | d |
| 37.60 | 2.390 | d |
| 38.73 | 2.325 | d |

### Example 8: Preparation of the GTM-3 material with a Si/Ge ratio in the gel of 5 from (1S,2S)-N-ethyl-N-methyl-pseudoephedrinium, at a temperature of 60°C.

In this example, the temperature of the hydrothermal crystallization treatment is reduced to 60°C (instead of 100°C such as in the preceding examples), thereby allowing the use of Pyrex jars instead of autoclaves.

0.57 g of GeO₂ are dissolved in 6.36 g of aqueous (1S,2S)-N-ethyl-N-methyl-pseudoephedrinium hydroxide solution with a concentration of 28.8 wt%. Next, 5.76 g of tetraethylorthosilicate are added, leaving the mixture under stirring to remove ethanol. Finally, 0.34 g of hydrofluoric acid (48 wt%) are added and stirred until homogeneous with the help of a spatula. The prepared gel has the following composition: 0.25 ROH : 0.833 SiO₂ : 0.167 GeO₂ : 0.25 HF : 6.5 H₂O, wherein ROH is (1S,2S)-N-ethyl-N-methyl-pseudoephedrinium hydroxide.

The gel is transferred to Pyrex jars which are heated at 60°C for 14 days under static conditions. The obtained solid is filtered, washed with ethanol and water, and dried. The solid obtained, GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.70 | 18.805 | f |
| 5.79 | 15.269 | d |
| 7.42 | 11.918 | d |
| 10.01 | 8.840 | d |
| 10.56 | 8.380 | d |
| 11.07 | 7.989 | d |
| 12.01 | 7.368 | d |
| 12.51 | 7.072 | d |
| 14.57 | 6.080 | d |
| 15.64 | 5.661 | d |
| 17.06 | 5.196 | d |
| 17.43 | 5.085 | d |
| 18.98 | 4.676 | d |
| 20.39 | 4.356 | d |
| 21.49 | 4.134 | m |
| 23.88 | 3.726 | f |
| 24.51 | 3.629 | d |
| 25.80 | 3.454 | d |
| 26.83 | 3.323 | d |
| 28.91 | 3.089 | d |
| 30.10 | 2.969 | d |
| 31.21 | 2.864 | d |
| 31.90 | 2.805 | d |
| 33.58 | 2.669 | d |
| 34.74 | 2.582 | d |
| 36.17 | 2.483 | d |
| 36.59 | 2.454 | d |
| 38.30 | 2.350 | d |
| 38.93 | 2.312 | d |

### Example 9: Preparation of the GTM-3 material with a Si/Ge ratio in the gel of 3 from (1S,2S)-N-ethyl-N-methyl-pseudoephedrinium.

In this example, the Ge content is increased to a Si/Ge ratio in the gel of 3 (instead of 5 such as in the preceding examples).

0.74 g of GeO₂ are dissolved in 5.38 g of aqueous (1S,2S)-N-ethyl-N-methyl-pseudoephedrinium hydroxide solution with a concentration of 29.7 wt%. Next, 4.52 g of tetraethylorthosilicate are added, leaving the mixture under stirring to remove ethanol. Finally, 0.30 g of hydrofluoric acid (48 wt%) are added and stirred until homogeneous with the help of a spatula. The prepared gel has the following composition: 0.25 ROH : 0.75 SiO₂ : 0.25 GeO₂ : 0.25 HF : 6.5 H₂O, wherein ROH is (1S,2S)-N-ethyl-N-methyl-pseudoephedrinium hydroxide.

The gel is transferred to Teflon sleeves which are inserted into steel autoclaves and heated at 100°C for 6 days under static conditions. The obtained solid is filtered, washed with ethanol and water, and dried. The solid obtained, GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.68 | 18.900 | f |
| 5.73 | 15.415 | d |
| 7.43 | 11.898 | d |
| 8.04 | 10.995 | d |
| 9.96 | 8.882 | d |
| 10.51 | 8.415 | d |
| 11.03 | 8.020 | d |
| 12.02 | 7.366 | d |
| 12.46 | 7.107 | d |
| 14.14 | 6.263 | d |
| 14.54 | 6.091 | d |
| 15.65 | 5.662 | d |
| 17.04 | 5.204 | m |
| 17.36 | 5.108 | m |
| 17.99 | 4.932 | d |
| 18.92 | 4.690 | d |
| 20.35 | 4.365 | d |
| 21.45 | 4.143 | m |
| 22.19 | 4.006 | d |
| 23.71 | 3.752 | f |
| 24.39 | 3.650 | m |
| 25.56 | 3.486 | d |
| 25.79 | 3.454 | d |
| 26.91 | 3.313 | d |
| 27.93 | 3.194 | d |
| 28.88 | 3.092 | d |
| 30.11 | 2.968 | d |
| 31.20 | 2.867 | d |
| 31.94 | 2.802 | d |
| 33.09 | 2.705 | d |
| 33.62 | 2.666 | d |
| 34.66 | 2.588 | d |
| 36.15 | 2.485 | d |
| 36.66 | 2.452 | d |
| 37.37 | 2.407 | d |
| 38.44 | 2.342 | d |
| 39.02 | 2.308 | d |
| 39.84 | 2.261 | d |

### Example 10: Preparation of the AI-GTM-3 material with a Si/Ge ratio in the gel of 3, and a T/AI ratio of 70, from (1S,2S)-N-ethyl-N-methyl-pseudoephedrinium, and with seedings.

This example demonstrates the possibility of obtaining the material object of the invention in the presence of aluminum in the synthesis gel, in this particular case which does not limit the scope of the invention, Al is introduced to the gel in a T/AI ratio in the gel equal to 70. Furthermore, seedings of previously prepared GTM-3 material are also introduced into the gel to favor crystallization, although the presence thereof is not essential to form the material in the presence of Al.

0.60 g of GeO₂ are dissolved in 4.21 g of aqueous (1S,2S)-N-ethyl-N-methyl-pseudoephedrinium hydroxide solution with a concentration of 30.8 wt%. Next, 3.67 g of tetraethylorthosilicate and 0.07 g of Al isopropoxide are added, leaving the mixture under stirring to remove ethanol, isopropanol, and water required to obtain the desired composition. Then, 1.15 g of hydrofluoric acid (10 wt%) are added. Lastly, 0.16 g of the previously prepared GTM-3 material (according to Example 9) are added and stirred until homogeneous. The prepared gel has the following composition: 0.25 ROH : 0.75 SiO₂ : 0.25 GeO₂ : 0.007 Al₂O₃ : 0.25 HF : 3.68 H₂O, wherein ROH is (1S,2S)-N-ethyl-N-methyl-pseudoephedrinium hydroxide, and with 10% seeding (by weight with respect to the sum of SiO₂ and GeO₂) of previously prepared solid GTM-3(SS).

The gel is transferred to Teflon sleeves which are inserted into steel autoclaves and heated at 100°C for 9 days under static conditions. The obtained solid is filtered, washed with ethanol and water, and dried. The solid obtained, AI-GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.66 | 18.956 | m |
| 5.72 | 15.450 | d |
| 7.41 | 11.935 | d |
| 9.98 | 8.860 | d |
| 10.53 | 8.402 | d |
| 11.05 | 8.010 | d |
| 12.04 | 7.351 | d |
| 12.47 | 7.100 | d |
| 14.17 | 6.249 | d |
| 14.57 | 6.081 | d |
| 15.67 | 5.655 | d |
| 17.08 | 5.192 | d |
| 17.43 | 5.088 | d |
| 18.02 | 4.922 | d |
| 18.98 | 4.677 | d |
| 20.41 | 4.351 | d |
| 20.73 | 4.282 | d |
| 21.51 | 4.130 | m |
| 22.29 | 3.988 | d |
| 22.81 | 3.898 | d |
| 23.81 | 3.737 | f |
| 24.07 | 3.698 | f |
| 24.51 | 3.632 | d |
| 24.77 | 3.594 | d |
| 25.67 | 3.471 | d |
| 25.93 | 3.436 | d |
| 26.61 | 3.347 | d |
| 26.99 | 3.304 | m |
| 28.05 | 3.181 | d |
| 29.10 | 3.069 | d |
| 29.71 | 3.005 | d |
| 30.28 | 2.952 | d |
| 30.92 | 2.890 | d |
| 31.38 | 2.851 | d |
| 32.06 | 2.792 | d |
| 33.31 | 2.688 | d |
| 33.71 | 2.659 | d |
| 34.29 | 2.615 | d |
| 34.85 | 2.575 | d |
| 35.56 | 2.525 | d |
| 36.34 | 2.472 | d |
| 36.90 | 2.436 | d |
| 37.51 | 2.398 | d |
| 38.61 | 2.332 | d |
| 39.24 | 2.296 | d |

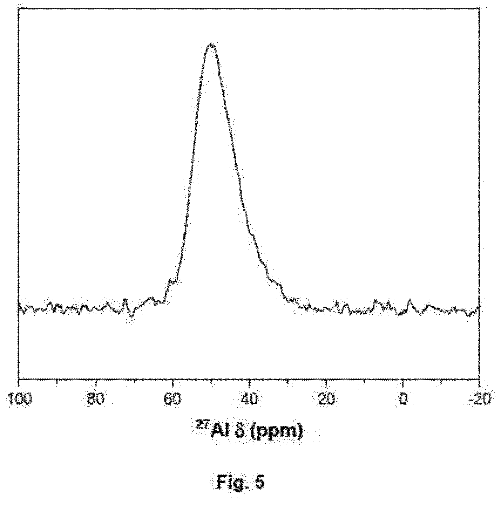

The incorporation of Al into the AI-GTM-3(SS) material is demonstrated by solid-state NMR of ²⁷Al (Figure 5), in which the presence of a single signal at 50 ppm proves the incorporation of Al in tetrahedral positions of the ITV structure.

### Example 11: Preparation of the B-GTM-3 material with a Si/Ge ratio in the gel of 5, and a T/B ratio of 70, from (1S,2S)-N-ethyl-N-methyl-pseudoephedrinium.

This example demonstrates the possibility of obtaining the material object of the invention in the presence of boron in the synthesis gel, in this particular case which does not limit the scope of the invention, B is introduced to the gel in a T/B ratio in the gel equal to 70.

0.35 g of GeO₂ are dissolved in 3.68 g of aqueous (1S,2S)-N-ethyl-N-methyl-pseudoephedrinium hydroxide solution with a concentration of 30.6 wt%. Next, 3.54 g of tetraethylorthosilicate, 0.018 g of boric acid, and 0.20 g of water (miliQ) are added, leaving the mixture under stirring to remove ethanol. Finally, 0.21 g of hydrofluoric acid (48 wt%) are added and stirred until homogeneous with the help of a spatula. The prepared gel has the following composition: 0.25 ROH : 0.833 SiO₂ : 0.167 GeO₂ : 0.007 B₂O₃ : 0.25 HF : 6.5 H₂O, wherein ROH is (1S,2S)-N-ethyl-N-methyl-pseudoephedrinium hydroxide.

The gel is transferred to Teflon sleeves which are inserted into steel autoclaves and heated at 100°C for 14 days under static conditions. The obtained solid is filtered, washed with ethanol and water, and dried. The solid obtained, B-GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.69 | 18.836 | f |
| 5.77 | 15.319 | d |
| 7.45 | 11.869 | d |
| 10.03 | 8.823 | d |
| 10.64 | 8.311 | d |
| 11.05 | 8.008 | d |
| 12.05 | 7.342 | d |
| 12.52 | 7.064 | d |
| 14.33 | 6.177 | d |
| 14.61 | 6.064 | d |
| 15.65 | 5.661 | d |
| 17.09 | 5.188 | d |
| 17.46 | 5.076 | d |
| 18.10 | 4.897 | d |
| 18.99 | 4.674 | d |
| 20.56 | 4.320 | d |
| 21.59 | 4.116 | m |
| 22.28 | 3.988 | d |
| 23.89 | 3.725 | f |
| 24.76 | 3.596 | m |
| 25.79 | 3.454 | m |
| 27.03 | 3.299 | d |
| 29.01 | 3.078 | d |
| 30.16 | 2.964 | d |
| 32.01 | 2.796 | d |
| 33.59 | 2.668 | d |
| 34.90 | 2.571 | d |
| 36.36 | 2.471 | d |
| 36.92 | 2.433 | d |
| 37.77 | 2.380 | d |
| 38.69 | 2.327 | d |

### Example 12: Preparation of the Sn-GTM-3 material with a Si/Ge ratio in the gel of 5, and a T/Sn ratio of 140, from (1S,2S)-N-ethyl-N-methyl-pseudoephedrinium.

This example demonstrates the possibility of obtaining the material object of the invention in the presence of tin in the synthesis gel, in this particular case which does not limit the scope of the invention, Sn is introduced to the gel in a T/Sn ratio in the gel equal to 140.

0.35 g of GeO₂ are dissolved in 4.03 g of aqueous (1S,2S)-N-ethyl-N-methyl-pseudoephedrinium hydroxide solution with a concentration of 27.9 wt%. Next, 3.53 g of tetraethylorthosilicate and 0.038 g of tin tetrachloride are added, leaving the mixture under stirring to remove ethanol. Finally, 0.21 g of hydrofluoric acid (48 wt%) are added and stirred until homogeneous with the help of a spatula. The prepared gel has the following composition: 0.25 ROH : 0.833 SiO₂ : 0.167 GeO₂ : 0.007 SnO₂ : 0.25 HF : 6.5 H₂O, wherein ROH is (1S,2S)-N-ethyl-N-methyl-pseudoephedrinium hydroxide.

The gel is transferred to Teflon sleeves which are inserted into steel autoclaves and heated at 100°C for 6 days under static conditions. The obtained solid is filtered, washed with ethanol and water, and dried. The solid obtained, Sn-GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.73 | 18.673 | f |
| 5.80 | 15.247 | d |
| 7.48 | 11.814 | d |
| 8.29 | 10.653 | d |
| 10.04 | 8.808 | d |
| 10.58 | 8.364 | d |
| 11.09 | 7.977 | d |
| 12.06 | 7.341 | d |
| 12.54 | 7.057 | d |
| 13.79 | 6.417 | d |
| 14.20 | 6.239 | d |
| 14.60 | 6.069 | d |
| 15.69 | 5.647 | d |
| 17.07 | 5.194 | d |
| 17.40 | 5.098 | d |
| 18.10 | 4.897 | d |
| 18.98 | 4.676 | m |
| 20.44 | 4.345 | d |
| 20.77 | 4.274 | d |
| 21.50 | 4.133 | m |
| 22.28 | 3.991 | d |
| 23.76 | 3.745 | f |
| 24.07 | 3.698 | f |
| 24.50 | 3.634 | m |
| 25.86 | 3.445 | m |
| 26.93 | 3.310 | m |
| 27.98 | 3.189 | d |
| 29.07 | 3.072 | d |
| 30.21 | 2.959 | d |
| 31.36 | 2.853 | d |
| 32.06 | 2.792 | d |
| 33.26 | 2.692 | d |
| 33.63 | 2.665 | d |
| 34.78 | 2.580 | d |
| 35.58 | 2.522 | d |
| 36.19 | 2.482 | d |
| 36.79 | 2.443 | d |
| 37.48 | 2.399 | d |
| 38.39 | 2.345 | d |
| 39.06 | 2.304 | d |
| 39.99 | 2.255 | d |

### Example 13: Preparation of the Ti-GTM-3 material with a Si/Ge ratio in the gel of 5, and a T/Ti ratio of 140, from (1S,2S)-N-ethyl-N-methyl-pseudoephedrinium.

This example demonstrates the possibility of obtaining the material object of the invention in the presence of titanium in the synthesis gel, in this particular case which does not limit the scope of the invention, Ti is introduced to the gel in a T/Ti ratio in the gel equal to 140.

0.35 g of GeO₂ are dissolved in 4.02 g of aqueous (1S,2S)-N-ethyl-N-methyl-pseudoephedrinium hydroxide solution with a concentration of 27.9 wt%. Next, 3.53 g of tetraethylorthosilicate and 0.04 g of titanium (IV) isopropoxide are added, leaving the mixture under stirring to remove ethanol. Finally, 0.21 g of hydrofluoric acid (48 wt%) are added and stirred until homogeneous with the help of a spatula. The prepared gel has the following composition: 0.25 ROH : 0.833 SiO₂ : 0.167 GeO₂ : 0.007 TiO₂ : 0.25 HF : 6.5 H₂O, wherein ROH is (1S,2S)-N-ethyl-N-methyl-pseudoephedrinium hydroxide.

The gel is transferred to Teflon sleeves which are inserted into steel autoclaves and heated at 100°C for 42 days under static conditions. The obtained solid is filtered, washed with ethanol and water, and dried. The solid obtained, Ti-GTM-3(SS), presents the characteristic X-ray diffraction pattern of the ITV structure, showing the main diffraction maxima listed below:

| Angle 2θ (±0.20) (°) | Distance d (±0.500) (Å) | Relative intensity |
|---|---|---|
| 4.72 | 18.730 | f |
| 5.79 | 15.275 | d |
| 7.47 | 11.831 | d |
| 8.24 | 10.718 | d |
| 9.60 | 9.209 | d |
| 10.05 | 8.806 | d |
| 10.59 | 8.357 | d |
| 11.11 | 7.967 | d |
| 12.08 | 7.327 | d |
| 12.55 | 7.056 | d |
| 14.22 | 6.228 | d |
| 14.62 | 6.060 | d |
| 15.73 | 5.633 | d |
| 17.12 | 5.180 | d |
| 17.46 | 5.081 | d |
| 18.10 | 4.898 | d |
| 19.04 | 4.662 | m |
| 20.48 | 4.337 | d |
| 20.77 | 4.274 | d |
| 21.56 | 4.121 | f |
| 22.42 | 3.962 | d |
| 23.38 | 3.802 | d |
| 23.86 | 3.730 | f |
| 24.12 | 3.689 | m |
| 24.61 | 3.614 | d |
| 24.82 | 3.587 | d |
| 25.84 | 3.448 | d |
| 26.62 | 3.346 | d |
| 27.05 | 3.296 | d |
| 28.96 | 3.084 | d |
| 30.30 | 2.949 | d |
| 30.88 | 2.894 | d |
| 31.34 | 2.854 | d |
| 32.20 | 2.780 | d |
| 32.91 | 2.719 | d |
| 33.35 | 2.685 | d |
| 33.74 | 2.657 | d |
| 34.35 | 2.609 | d |
| 34.85 | 2.574 | d |
| 35.65 | 2.516 | d |
| 36.38 | 2.469 | d |
| 36.95 | 2.433 | d |
| 37.59 | 2.393 | d |
| 38.73 | 2.325 | d |
| 39.17 | 2.298 | d |

The following Examples 14 and 15 represent conclusive evidence that the GTM-3 material is enriched in one enantiomorphic crystalline form or another depending on whether one enantiomer of the organic agent or another, i.e., (1S,2S)-N-ethyl-N-methyl-pseudoephedrinium or (1S,2S)-N-ethyl-N-methyl-pseudoephedrinium, is used. Said evidence is given by the fact that, if the same enantiomer of the organic agent is used to prepare the seeding and for the synthesis gel, crystallization is significantly faster than in the case of preparing the seeding and the synthesis gel with different enantiomers. This verifies that the GTM-3 seeding crystals are capable of recognizing the different enantiomers of the synthesis gel.

### Example 14: Enantioselective crystallization of the GTM-3 material with a Si/Ge ratio in the gel of 8 from (1S,2S)-N-ethyl-N-methyl-pseudoephedrinium or (1R,2R)-N-ethyl-N-methyl -pseudoephedrinium, with GTM-3(SS) seedings.

A) 0.26 g of GeO₂ are dissolved in 4.07 g of aqueous (1S,2S)-N-ethyl-N-methyl-pseudoephedrinium hydroxide solution with a concentration of 30.6 wt%. Next, 4.18 g of tetraethylorthosilicate and 0.27 g of water (milliQ) are added, leaving the mixture under stirring to remove ethanol. Next, 0.23 g of hydrofluoric acid (48 wt%) are added and stirred. Lastly, 0.073 g of seedings of the GTM-3(SS) material previously prepared (with the enantiomer (1S,2S)-N-ethyl-N-methyl-pseudoephedrinium, according to Example 3) are added and stirred until homogeneous. The prepared gel has the following composition: 0.25 ROH : 0.89 SiO₂ : 0.11 GeO₂ : 0.25 HF : 6.5 H₂O, wherein ROH is (1S,2S)-N-ethyl-N-methyl-pseudoephedrinium hydroxide, and with 5% seeding (by weight with respect to the sum of SiO₂ and GeO₂) of GTM-3(SS) solid prepared with the enantiomer which is the same as that used in the gel.
B) Moreover, the same experiment is performed using the same GTM-3(SS) seedings, but in this case by adding the other enantiomer, (1R,2R)-N-ethyl-N-methyl-pseudoephedrinium, in the gel. 0.26 g of GeO₂ are dissolved in 4.26 g of aqueous (1R,2R)-N-ethyl-N-methyl-pseudoephedrinium hydroxide solution with a concentration of 29.3 wt%. Next, 4.18 g of tetraethylorthosilicate and 0.08 g of water (milliQ) are added, leaving the mixture under stirring to remove ethanol. Next, 0.23 g of hydrofluoric acid (48 wt%) are added and stirred. Lastly, 0.073 g of seedings of the GTM-3(SS) material previously prepared (with the enantiomer (1S,2S)-N-ethyl-N-methyl-pseudoephedrinium, according to Example 3) are added and stirred until homogeneous. The prepared gel has the following composition: 0.25 ROH : 0.89 SiO₂ : 0.11 GeO₂ : 0.25 HF : 6.5 H₂O, wherein ROH is (1R,2R)-N-ethyl-N-methyl-pseudoephedrinium hydroxide, and with 5% seeding (by weight with respect to the sum of SiO₂ and GeO₂) of GTM-3(SS) solid prepared with the enantiomer which is opposite to that used in the gel.

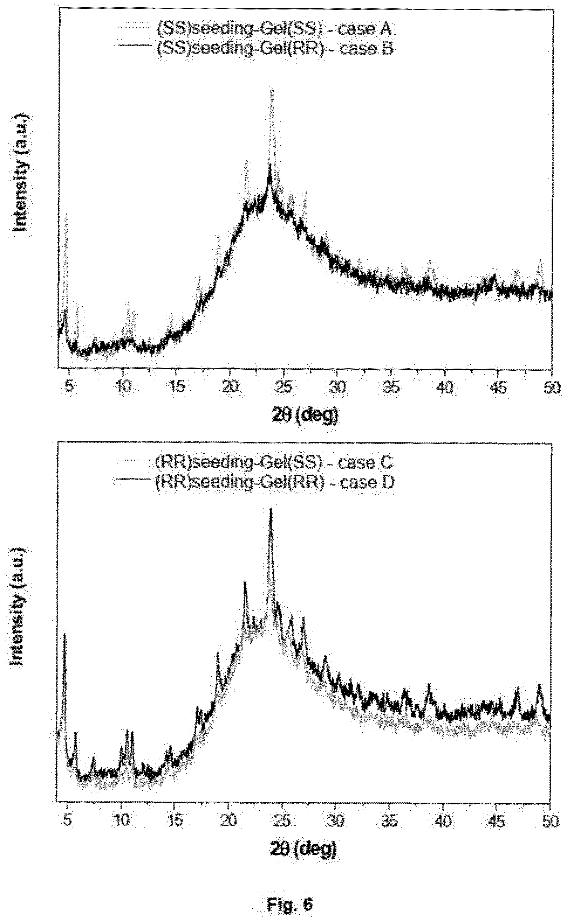

The gels are transferred to Teflon sleeves which are inserted into steel autoclaves and heated at 100°C for 3 days under static conditions. The obtained solids are filtered, washed with ethanol and water, and dried. If the enantiomer used in the synthesis gel (1S,2S) is the same as the one used in the seeding preparation (1S,2S) (case A), the obtained solid, GTM-3(SS), presents the characteristic X-ray diffraction pattern of GTM-3, crystallizing significantly faster due to the seeding prepared with the same enantiomer. On the contrary, if the enantiomer used in the synthesis gel (1R,2R) is opposite to that used in the seeding preparation (1S,2S) (case B), the crystallization of the GTM-3 material is much slower (see the top part of Figure 6).

### Example 15: Enantioselective crystallization of the GTM-3 material with a Si/Ge ratio in the gel of 8 from (1S,2S)-N-ethyl-N-methyl-pseudoephedrinium or (1R,2R)-N-ethyl-N-methyl -pseudoephedrinium, with GTM-3(RR) seedings.

Next, the enantioselective crystallization experiments of the GTM-3 material of Example 14 are repeated, but in this case using GTM-3 seedings previously prepared with the enantiomer, (1R,2R)-N-ethyl-N-methyl-pseudoephedrinium.

C) 0.26 g of GeO₂ are dissolved in 3.60 g of aqueous (1S,2S)-N-ethyl-N-methyl-pseudoephedrinium hydroxide solution with a concentration of 34.6 wt%. Then, 4.18 g of tetraethylorthosilicate and 0.74 g of water (MilliQ) are added, leaving the mixture under stirring to remove ethanol. Next, 0.23 g of hydrofluoric acid (48 wt%) are added and stirred. Lastly, 0.073 g of seedings of the GTM-3(RR) material previously prepared (with the opposite enantiomer, (1R,2R)-N-ethyl-N-methyl-pseudoephedrinium, according to Example 4) are added and stirred until homogeneous. The prepared gel has the following composition: 0.25 ROH : 0.89 SiO₂ : 0.11 GeO₂ : 0.25 HF : 6.5 H₂O, wherein ROH is (1S,2S)-N-ethyl-N-methyl-pseudoephedrinium hydroxide, and with 5% seeding (by weight with respect to the sum of SiO₂ and GeO₂) of solid GTM-3(RR) prepared with the enantiomer contrary to that used in the gel.

D) Moreover, the same experiment is performed using the same GTM-3(RR) seedings, but in this case by adding the same enantiomer, (1R,2R)-N-ethyl-N-methyl-pseudoephedrinium, in the gel. 0.26 g of GeO₂ are dissolved in 4.25 g of aqueous (1R,2R)-N-ethyl-N-methyl-pseudoephedrinium hydroxide solution with a concentration of 29.3 wt%. Then, 4.18 g of tetraethylorthosilicate and 0.09 g of water (milliQ) are added, leaving the mixture under stirring to remove ethanol. Next, 0.23 g of hydrofluoric acid (48 wt%) are added and stirred. Lastly, 0.073 g of seedings of the GTM-3(RR) material previously prepared (with the enantiomer (1R,2R)-N-ethyl-N-methyl-pseudoephedrinium, according to Example 4) are added and stirred until homogeneous. The prepared gel has the following composition: 0.25 ROH : 0.89 SiO₂ : 0.11 GeO₂ : 0.25 HF : 6.5 H₂O, wherein ROH is (1R,2R)-N-ethyl-N-methyl-pseudoephedrinium hydroxide, and with 5% seeding (by weight with respect to the sum of SiO₂ and GeO₂) of GTM-3(RR) solid prepared with the enantiomer which is the same as that used in the gel.

The gels are transferred to Teflon sleeves which are inserted into steel autoclaves and heated at 100°C for 3 days under static conditions. The obtained solids are filtered, washed with ethanol and water, and dried. If the enantiomer used in the synthesis gel (1R,2R) is the same as the one used in the seeding preparation (1R,2R) (case D), the obtained solid, GTM-3(RR), presents the characteristic X-ray diffraction pattern, crystallizing significantly faster due to the seeding prepared with the same enantiomer. On the contrary, if the enantiomer used in the synthesis gel (1S,2S) is opposite to that used in the seeding preparation (1R,2R) (case C), the crystallization of the GTM-3 material is much slower (see the bottom part of Figure 6).

The same experiments of Examples 14 and 15 were repeated increasing seeding to 10% (by weight with respect to the sum of SiO₂ and GeO₂), giving rise to similar enantioselective crystallization results. In that sense, this clearly demonstrates that the GTM-3(SS) and GTM-3(RR) materials are at least enriched in either one of the enantiomorphic crystalline forms.

### Example 16: Characterization of the GTM-3(SS) material prepared according to Example 3, with a Si/Ge ratio of 5, by means solid state nuclear magnetic resonance at the magic angle.

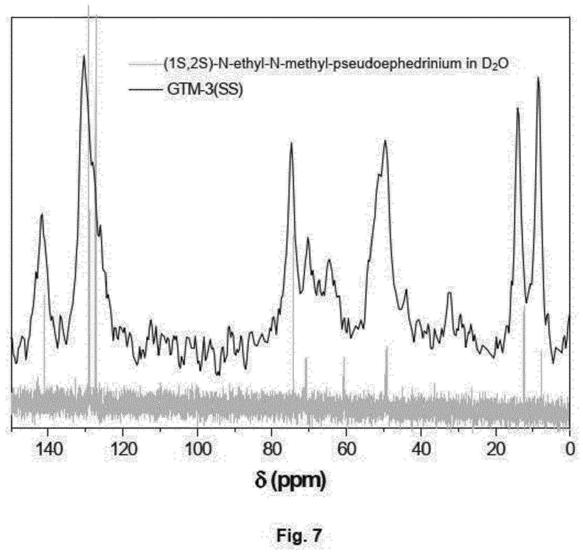

The GTM-3(SS) material prepared as described in Example 3 was characterized by means of ¹³C solid state nuclear magnetic resonance at the magic angle to confirm the integrity of the chiral organic species, (1S,2S)-N-ethyl-N-methyl-pseudoephedrinium. In the GTM-3(SS) material, bands, which are very similar to the bands observed for a solution in D₂O of the cation, (1S,2S)-N-ethyl-N-methyl-pseudoephedrinium (Figure 7-gray line), are observed at 8.5, 13.9, 50.3, 64.7, 70.1, 74.8, 130.2 and 141.7 ppm (Figure 7-black line), which demonstrates the complete incorporation thereof inside the GTM-3 material.

### Example 17: X-ray diffraction experiment at controlled temperature of the GTM-3(SS) material prepared according to Example 3, with a Si/Ge ratio of 5: thermal stability of the material.

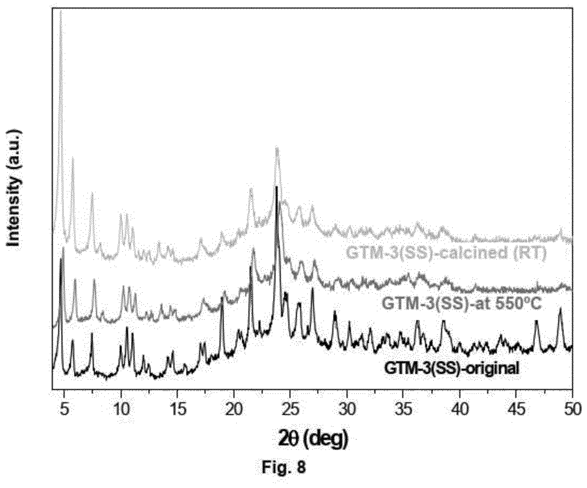

An X-ray diffraction experiment at increasing temperature is performed for the GTM-3 material obtained according to the method described in Example 3 (black line-bottom) for monitoring the *in situ* air calcination process (Figure 8). It is observed that the structure is maintained at 550°C (the diffraction maxima remain in the same positions, with only the relative intensities varying due to the removal of the organic material) (gray line-middle). Once the GTM-3 material is subjected to calcination and cooled to room temperature (light gray line-top), the structure of the material is also maintained.

### Example 18: Air calcination and characterization of the GTM-3(SS) material prepared according to Example 9, with a Si/Ge ratio of 3: stability and resistance to the removal of organic.

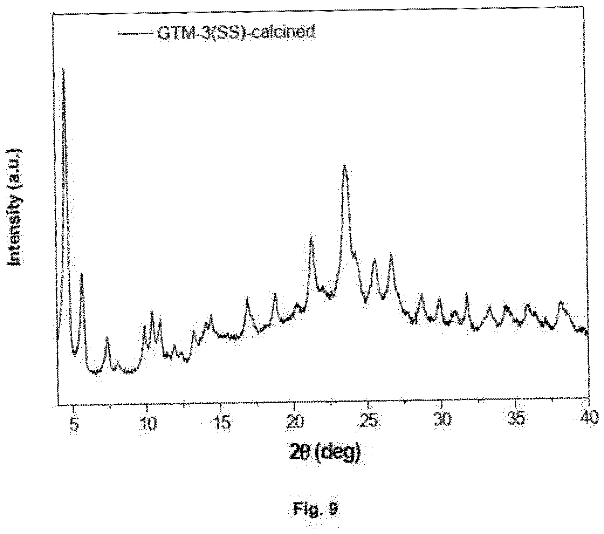

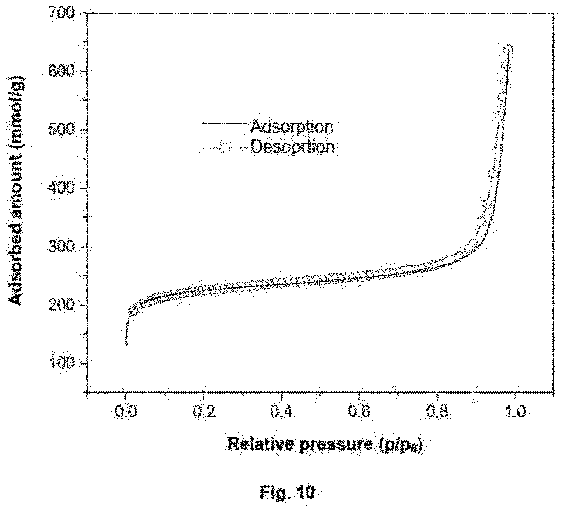

The GTM-3(SS) material prepared with a Si/Ge ratio of 3 was subjected to air calcination at 500°C for 4 hours. X-ray diffraction of this calcined material (Figure 9) again demonstrates the resistance of the structure to removal of the organics. Likewise, the N₂ adsorption/desorption isotherm (Figure 10) demonstrates the high porosity of the material, with a micropore volume of 0.31 cm³/g and an external area (BET) of 866 m²/g.

## Claims

1. A GTM-3 crystalline microporous material, **characterized by**:
• having a chemical composition in its anhydrous calcined form *a SiO₂ : b GeO₂ : c X₂O₃ : d YO₂,* wherein X is one or more trivalent elements, Y is one or more tetravalent elements other than Si or Ge, the *b*/*a* ratio can take any value greater than 0, *cl(a+b)* can take any value between 0 and 0.2, both included, and *dl(a+b)* can take any value between 0 and 0.2, both included;
• having an ITV structure;
• and being enantio-enriched in either one of the enantiomorphic crystalline forms of the ITV structure.

2. The material according to claim 1, wherein the ITV structure in its non-calcined form is defined by having an X-ray diffraction pattern characteristic thereof, recorded with a Philips X'PERT diffractometer using copper Kα radiation with a Ni filter, and comprising the following values of angles 2θ (°) and distance d (Å):
| Angle 2θ (±0.50) (°) | Distance d (±0.500) (Å) |
|---|---|
| 4.77 | 18.532 |
| 5.83 | 15.150 |
| 7.53 | 11.740 |
| 8.25 | 10.708 |
| 10.11 | 8.753 |
| 10.65 | 8.304 |
| 11.18 | 7.917 |
| 12.15 | 7.284 |
| 12.62 | 7.017 |
| 13.98 | 6.327 |
| 14.31 | 6.190 |
| 14.70 | 6.025 |
| 15.83 | 5.600 |
| 17.22 | 5.151 |
| 17.55 | 5.053 |
| 18.18 | 4.879 |
| 18.57 | 4.775 |
| 19.12 | 4.642 |
| 20.57 | 4.317 |
| 20.85 | 4.260 |
| 21.67 | 4.102 |
| 22.46 | 3.959 |
| 22.97 | 3.873 |
| 23.02 | 3.861 |
| 23.95 | 3.715 |
| 24.21 | 3.676 |
| 24.67 | 3.608 |
| 24.93 | 3.572 |
| 25.83 | 3.450 |
| 26.07 | 3.418 |
| 26.73 | 3.336 |
| 27.16 | 3.284 |
| 28.23 | 3.162 |
| 29.05 | 3.074 |
| 29.26 | 3.052 |
| 29.84 | 2.994 |
| 30.44 | 2.936 |
| 31.02 | 2.883 |
| 31.58 | 2.833 |
| 32.34 | 2.768 |
| 33.06 | 2.710 |
| 33.42 | 2.682 |
| 33.78 | 2.653 |
| 34.45 | 2.603 |
| 34.99 | 2.565 |
| 35.44 | 2.531 |
| 35.68 | 2.517 |
| 36.54 | 2.459 |
| 37.02 | 2.428 |
| 37.73 | 2.385 |
| 37.86 | 2.375 |
| 38.78 | 2.322 |
| 39.45 | 2.284 |

3. The material according to claim 2, wherein it comprises, for the values of angles 2θ (°) and distance d (Å), relative intensity values (I/Iₒ)·100 of:
| Angle 2θ (±0.20) (°) | Distance d (±0.500) (Å) | Relative intensity |
|---|---|---|
| 4.77 | 18.532 | e |
| 5.83 | 15.150 | d |
| 7.53 | 11.740 | d |
| 8.25 | 10.708 | d |
| 10.11 | 8.753 | d |
| 10.65 | 8.304 | d |
| 11.18 | 7.917 | d |
| 12.15 | 7.284 | d |
| 12.62 | 7.017 | d |
| 13.98 | 6.327 | d |
| 14.31 | 6.190 | d |
| 14.70 | 6.025 | d |
| 15.83 | 5.600 | d |
| 17.22 | 5.151 | d |
| 17.55 | 5.053 | d |
| 18.18 | 4.879 | d |
| 18.57 | 4.775 | d |
| 19.12 | 4.642 | b |
| 20.57 | 4.317 | d |
| 20.85 | 4.260 | d |
| 21.67 | 4.102 | e |
| 22.46 | 3.959 | d |
| 22.97 | 3.873 | d |
| 23.02 | 3.861 | d |
| 23.95 | 3.715 | f |
| 24.21 | 3.676 | m |
| 24.67 | 3.608 | d |
| 24.93 | 3.572 | d |
| 25.83 | 3.450 | d |
| 26.07 | 3.418 | d |
| 26.73 | 3.336 | d |
| 27.16 | 3.284 | d |
| 28.23 | 3.162 | d |
| 29.05 | 3.074 | d |
| 29.26 | 3.052 | d |
| 29.84 | 2.994 | d |
| 30.44 | 2.936 | d |
| 31.02 | 2.883 | d |
| 31.58 | 2.833 | d |
| 32.34 | 2.768 | d |
| 33.06 | 2.710 | d |
| 33.42 | 2.682 | d |
| 33.78 | 2.653 | d |
| 34.45 | 2.603 | d |
| 34.99 | 2.565 | d |
| 35.44 | 2.531 | d |
| 35.68 | 2.517 | d |
| 36.54 | 2.459 | d |
| 37.02 | 2.428 | d |
| 37.73 | 2.385 | d |
| 37.86 | 2.375 | d |
| 38.78 | 2.322 | d |
| 39.45 | 2.284 | d |
and wherein relative intensities are represented by "e"=40-100, "f"=60-100, "m"=40-60, "b"=0-60, and "d"=0-40.

4. The material according to any of claims 1 to 3, wherein X is at least one trivalent element selected from the group consisting of Al, B, In, Ga, Fe, Cr, Ti, V, and combinations thereof.

5. The material according to claim 4, wherein X is Al, B, or any combinations thereof.

6. The material according to any of claims 1 to 5, wherein Y is at least one tetravalent element selected from the group consisting of Sn, Ti, V, and combinations thereof.

7. The material according to any of claims 1 to 6, wherein *cl(a+b)* and *dl(a+b)* are 0.

8. The material according to any of claims 1 to 7, wherein the pores of the material are empty due to the removal of the organics.

9. A catalyst, **characterized in that** it comprises the GTM-3 crystalline microporous material according to claim 8, together with at least one hydrogenating-dehydrogenating component.

10. A method for preparing the GTM-3 crystalline microporous material according to claims 1 to 8, **characterized in that** it comprises the following steps:
a) preparing a synthesis gel by mixing at least one source of Si, a source of Ge, a source of water, a source of the (1R,2R)-N-ethyl-N-methyl-pseudoephedrinium cation or a source of the (1S,2S)-N-ethyl-N-methyl-pseudoephedrinium cation, and a source of fluoride;
b) subjecting the synthesis gel obtained in step (a) to a temperature of between 58°C and 130°C for a time of between 6 hours and 1 month until the crystalline microporous material is formed, and
c) recovering the GTM-3 crystalline microporous material obtained in step (b); and further comprises, optionally, an additional step (d), after recovery step (c), of removing occluded organic matter from the material recovered in step (c), which can be performed by means of thermal treatment or by means of extraction, preferably by means of thermal calcination treatment at a temperature of between 250°C and 600°C for a time of between 1 h and 48 h.

11. The method for preparing the material according to claim 10, **characterized in that** the source of organic cation of step (a) is in the form of hydroxide or halide.

12. The method for preparing the material according to any of claims 10 or 11, **characterized in that** the source of silicon of step (a) is selected from tetraethylorthosilicate, Aerosil SiO₂, and colloidal SiO₂, preferably the source of Si is tetraethylorthosilicate.

13. The method for preparing the material according to any of claims 10 to 12, wherein the source of Ge of step (a) is Ge dioxide.

14. The method for preparing the material according to any of claims 10 to 13, **characterized in that** the preparation of the synthesis gel of step (a) further comprises adding variable amounts of other trivalent elements (X), which can be selected from Al, B, In, Ga, Fe, Cr, Ti, V, and combinations thereof, and/or of tetravalents (Y) other than Si or Ge, which can be selected from Sn, Ti, V, and combinations thereof.

15. The method for preparing the material according to claims 10 to 14, wherein the source of fluoride of step (a) is hydrofluoric acid or ammonium fluoride.

16. The method for preparing the material according to claims 10 to 15, wherein previously obtained GTM-3 material crystals, which will act as seeds, are added after step (a) and before step (b).

17. Use of the GTM-3 crystalline microporous material according to claim 8 as an adsorbent of organic compounds.

18. Use of the GTM-3 crystalline microporous material according to claim 8 as a catalyst in reactions with organic compounds.
